# EUROPEAN PATENT SPECIFICATION

(11) **EP 3 064 048 B1**
(45) Date of publication and mention of the grant of the patent: **16.12.2020**
(21) Application number: 16155119.7
(22) Date of filing: 10.02.2016
(51) Int. Cl.: A01B 33/02, A01B 33/08

(54) **WALKING TYPE TILLER**
MOTORFRÄSE
MOTOCULTEUR

(30) Priority: 18.02.2015 JP 2015029457
(43) Date of publication of application: 07.09.2016
(62) Divisional of application: 16205186.6
(73) Proprietor: Iseki & Co., Ltd., Matsuyama-shi, Ehime 799-2692 (JP)
(72) Inventor: KURODA, Kyosei, Iyo-gun, Ehime 791-2193 (JP); NAKAGAWA, Hideaki, Iyo-gun, Ehime 791-2193 (JP); TOMIHISA, Akira, Iyo-gun, Ehime 791-2193 (JP); MIYAUCHI, Masao, Iyo-gun, Ehime 791-2193 (JP); USHIRODA, Tatsuya, Iyo-gun, Ehime 791-2193 (JP)
(74) Representative: Spengler, Robert

(56) References cited:
- EP-A2- 1 441 148
- EP-A2- 1 961 996
- JP-A- 2008 212 076
- US-A1- 2007 204 708

## Description

### BACKGROUND OF THE INVENTION

### Field of the Invention

The present invention relates to a walking type tiller.

### Description of the Related Art

Conventionally, a walking type tiller which utilizes the driving power from the engine is known (for example, refer to Japanese Patent Application Publication No. 2008-212076).

In the case of the walking type tiller, a gear unit for changing the rotation speed of the tilling claws into any one of a plurality of stages is provided in the transmission case which houses the transmission mechanism for transmitting the driving power from the engine.

The documents EP-A2-1 961 996 and US-A1-2007/0204708 each disclose arrangements whereby a main transmission is used in conjunction with a sub-transmission.

### SUMMARY OF THE INVENTION

### Problems to be Solved by the Invention

However, in the case of the walking type tiller described in the patent document of the above described Japanese Patent Application Publication No. 2008-212076, there is a problem that when it is necessary to increase the number of speed change stages, the large design change of the gear unit is required, and thus the manufacturing cost is increased corresponding to enlargement of the transmission case.

In view of the above-mentioned conventional problem, an object of the present invention is to furnish a walking type tiller which can increase the number of speed change stages without large design change of a main transmission case, and which has an improved usability, or operability.

### Means for Solving the Problems

The 1^{st} aspect of the present invention is a walking type tiller comprising:
an engine (20),
a tilling device (60), and
a main transmission case (1300) which houses a main speed change mechanism (300) that transmits a driving power which is transmitted from the engine (20) via a belt drive mechanism (200), to the tilling device (60) in a manner to be capable of speed changing
characterized by comprising:
   a sub-transmission case (1400) which houses a sub-speed change mechanism (400) that transmits the driving power transmitted via the belt drive mechanism (200), to the main speed change mechanism (300) in a manner to be capable of changing a speed of the driving power, the sub-transmission case (1400) being disposed between the belt drive mechanism (200) and the main transmission case (1300), wherein
   the main transmission case (1300) is provided with a main speed changing lever (80) which changes a speed change ratio of the main speed change mechanism (300),
   the sub-transmission case (1400) is provided with a sub-speed changing lever (70) which changes a speed change ratio of the sub-speed change mechanism (400), and
   a grip part of the sub-speed changing lever (70) is disposed in side view below the main speed changing lever (80).

By adopting the configuration for adding the sub-transmission case, the number of speed change stages as a whole can be easily increased without large design change of the main transmission case as compared to a case of adopting the configuration for adding the number of speed change stages into the main transmission case.

Furthermore, the sub-transmission case and the sub-speed changing lever can be easily added, and the sub-speed changing lever does not interfere with the main speed changing lever.

The 2^{nd} aspect of the present invention is the walking type tiller according to the 1^{st} aspect of the present invention, wherein
the sub-speed change mechanism (400) has
an input shaft (401) which receives the driving power from the belt drive mechanism (200) as input, and
an output shaft (402) which outputs the driving power changed in the speed to the main speed change mechanism (300), the output shaft (402) being rotatably supported to the input shaft (401),
the output shaft (402) of the sub-speed change mechanism (400) is connected to the input shaft (301) of the main speed change mechanism (300) by a connecting means in such a manner that the driving power can be transmitted to the input shaft (301) and the output shaft (402) can be attached to and detached from the input shaft (301), so that the sub-transmission case (1400) provided with the sub-speed changing lever (70) can be attached to and detached from the main transmission case (1300).

By means of this, speed change ratio can be changed by the input shaft and the output shaft.

Furthermore, the sub-transmission case which is in an assembled state can be easily assembled to the main transmission case, so that the assembly is easy, and the maintenance property is improved.

The 3^{rd} aspect of the present invention is the walking type tiller according to the 2^{nd} aspect of the present invention, wherein
the sub-speed change mechanism (400) has
a first gear unit (410) which has a first engagement claw part (410a), the first gear unit (410) being movably spline-coupled to the input shaft (401),
a second gear unit (420) which has a second engagement claw part (420a) that is formed so as to be capable of be fitted with the first engagement claw part (410a), the second gear unit (420) being fixed to the output shaft (402), and
a third gear unit (451, 452) which transmits the driving power transmitted to the input shaft (401), to the output shaft (402) of the second gear unit (420) at a predetermined speed change ratio to rotate the output shaft (402) by engaging with the first gear unit (410) which is moved on the input shaft (401) in interlocking with moving of the sub-speed changing lever (70) to a predetermined position, and
wherein the first engagement claw part (410a) of the first gear unit (410), which is moved on the input shaft (401) in interlocking with moving of the sub-speed changing lever (70) to a position that is different from the predetermined position, is fitted with the second engagement claw part (420a), so that the input shaft (401) and the output shaft (402) rotate integrally.

By means of this, it is possible to realize the sub-speed change mechanism which is compact and simple configuration, and has two speed change stages.

### Advantageous Effects of the Invention

According to the present invention, a working type tiller which can increase the number of speed change stages without large design change of the main transmission case and which has an improved usability, or operability, can be furnished.

### BRIEF DESCRIPTION OF THE DRAWINGS

FIG. 1 is a left side view of a walking type tiller in present embodiment according to the present invention;
FIG. 2 is a plan view of a walking type tiller in present embodiment according to the present invention;
FIG. 3 is a left side view of the walking type tiller and shows a state in which a belt left cover is removed from the walking type tiller shown in FIG. 1;
FIG. 4 is a plan view of the walking type tiller and shows a state in which a belt left cover is removed from the walking type tiller shown in FIG. 2.
FIG. 5 is a left side view of the walking type tiller in the present embodiment and shows a state in which the output pulley, the input pulley, and the belt right cover are removed from the walking type tiller shown in FIG. 3;
FIG. 6 is a left side view of the walking type tiller in the present embodiment and shows a state in which the belt right cover is attached to the walking type tiller shown in FIG. 5;
FIG. 7(a) is a plan view of the muffler guard of the present embodiment;
FIG. 7(b) is a left side view of the muffler guard of the present embodiment;
FIG. 7(c) is a rear side view of the muffler guard of the present embodiment;
FIG. 8(a) is a right side view of the muffler guard of the present embodiment;
FIG. 8(b) is a bottom view of the muffler guard of the present embodiment;
FIG. 8(c) is a front view of the muffler guard of the present embodiment;
FIG. 9 is a left side view which indicates the state where the sub-transmission case is attached to the main transmission of the present embodiment;
FIG. 10(a) is a schematic sectional view which is viewed from the lower side and indicates the configuration of the sub-speed change mechanism that is housed in the sub-transmission case, and the connection relation between the sub-speed change mechanism and the main speed change mechanism that is housed in the main transmission case, in a state where the sub-speed changing lever is set at a low-speed position;
FIG. 10(b) is an enlarged side view of a shifter stay in the sub-speed change mechanism shown in FIG. 10(a);
FIG. 11 is a schematic sectional view which is viewed from the lower side, indicates the configuration of the sub-speed change mechanism that is housed in the sub-transmission case, and indicates a state in which the sub-speed changing lever is set at a high-speed position;
FIG. 12 is a partial enlarged perspective view of the sub-speed change mechanism that is housed in the sub-transmission case;
FIG. 13 is a transmission path diagram which mainly indicates the sub-speed change mechanism and the main speed change mechanism, and the state of the sub-speed change mechanism in a case where the sub-speed changing lever is set at the low-speed position;
FIG. 14 is a transmission path diagram which mainly indicates the sub-speed change mechanism and the main speed change mechanism, and the state of the sub-speed change mechanism in a case where the sub-speed changing lever is set at the high-speed position;
FIG. 15 is a left side view which shows a state in which the front weight mounting member is mounted to the walking type tiller of present embodiment;
FIG. 16(a) is a partial plan view which includes a partial sectional view and shows a state in which the front weight mounting member is not mounted to the walking type tiller of the present embodiment;
FIG. 16(b) is a partial plan view which includes a partial sectional view and shows a state in which the front weight mounting member is mounted to the walking type tiller of the present embodiment;
FIG. 17 is a perspective view of the front weight mounting member;
FIG. 18(a) is a schematic plan view which indicates a first variation of the attaching structure of the front weight mounting member explained by using FIG. 16(b) ; and
FIG. 18(b) is a schematic plan view which indicates a second variation of the attaching structure of the front weight mounting member explained by using FIG. 16(b).

### Description of Symbols

- 1: walking type tiller
- 10: machine-body frame
- 20: engine
- 21: output pulley
- 30: fuel tank
- 40: operating handle
- 50: implement-hitching part
- 55: resistance bar
- 60: tilling device
- 60a: tilling claws
- 70: sub-speed changing lever
- 70a: grip part
- 80: main speed changing lever
- 90: transport wheel part
- 91: wheel
- 100: muffler
- 120: muffler cover
- 130: handle bracket
- 140: muffler guard
- 150a: first front stay
- 150b: first rear stay
- 160: second stay
- 180: third stay
- 200: belt drive mechanism
- 201: input pulley
- 210: transmission belt
- 220: belt left cover
- 230: belt right cover
- 231: output side belt stopper
- 232: input side belt stopper
- 300: main speed change mechanism
- 400: sub-speed change mechanism
- 1300: main transmission case
- 1400: sub-transmission case

### PREFERRED EMBODIMENTS OF THE INVENTION

Hereinafter, referring to the drawings, descriptions are given regarding a walking type tiller of one embodiment of a walking type tiller according to the present invention.

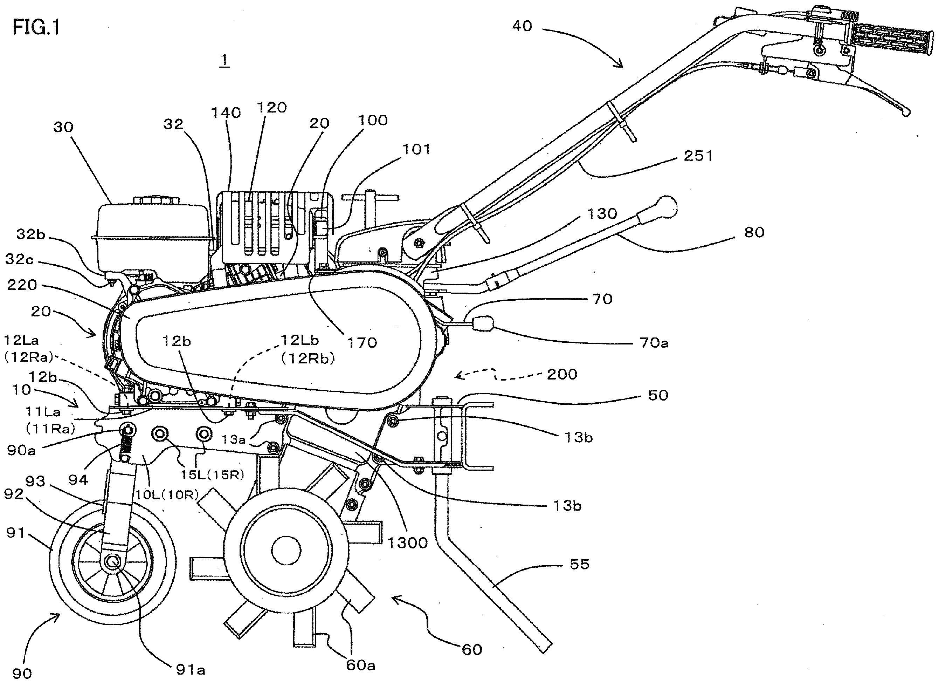

First of all, a configuration with respect to the walking type tiller 1 of the present embodiment is described utilizing FIG. 1 to FIG. 4.

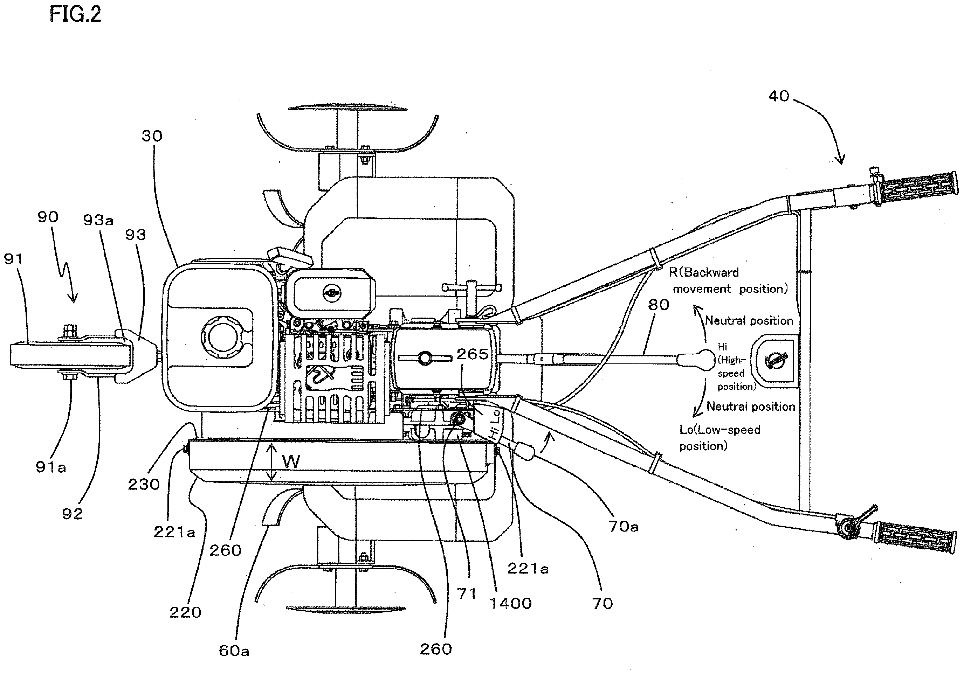

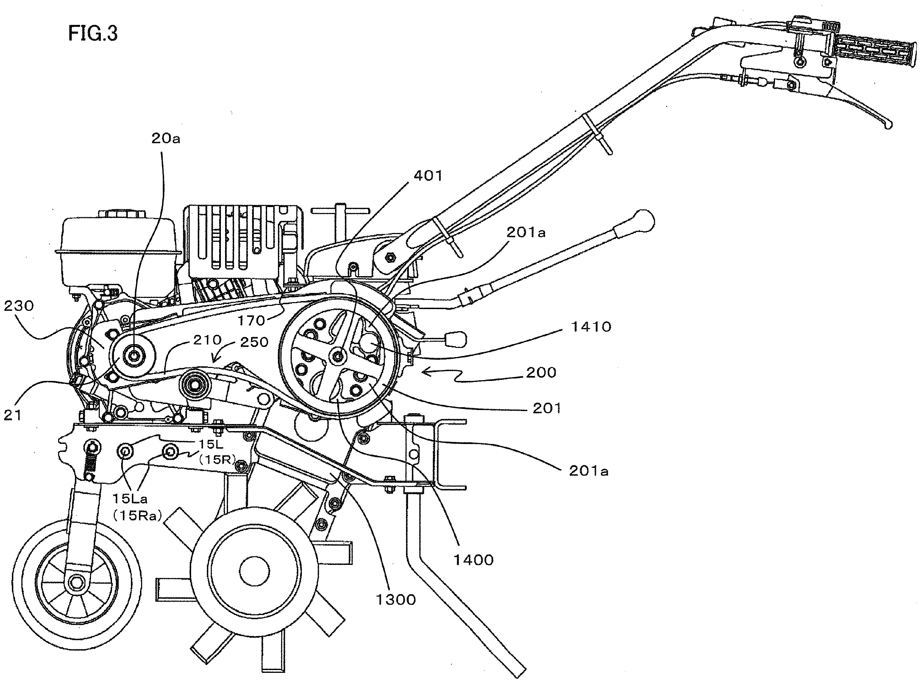

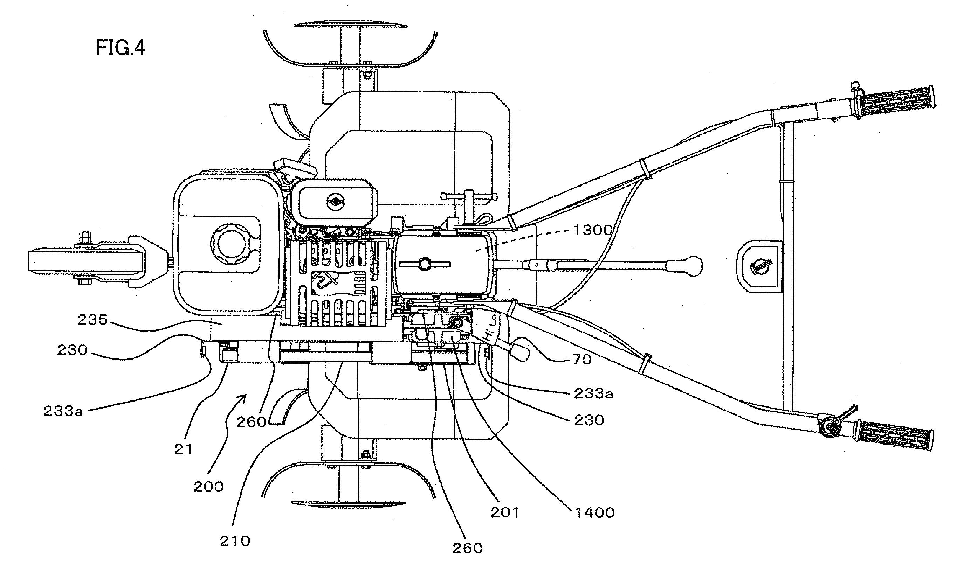

FIG. 1 is a left side view of a walking type tiller 1 in the present embodiment according to the present invention. FIG. 2 is a plan view of the walking type tiller 1 in the present embodiment according to the present invention. FIG. 3 is a left side view of the walking type tiller 1 and shows a state in which a belt left cover 220 is detached from the walking type tiller 1 shown in FIG. 1. FIG. 4 is a plan view of the walking type tiller 1 and shows a state in which a belt left cover 220 is detached from the walking type tiller 1 shown in FIG. 2.

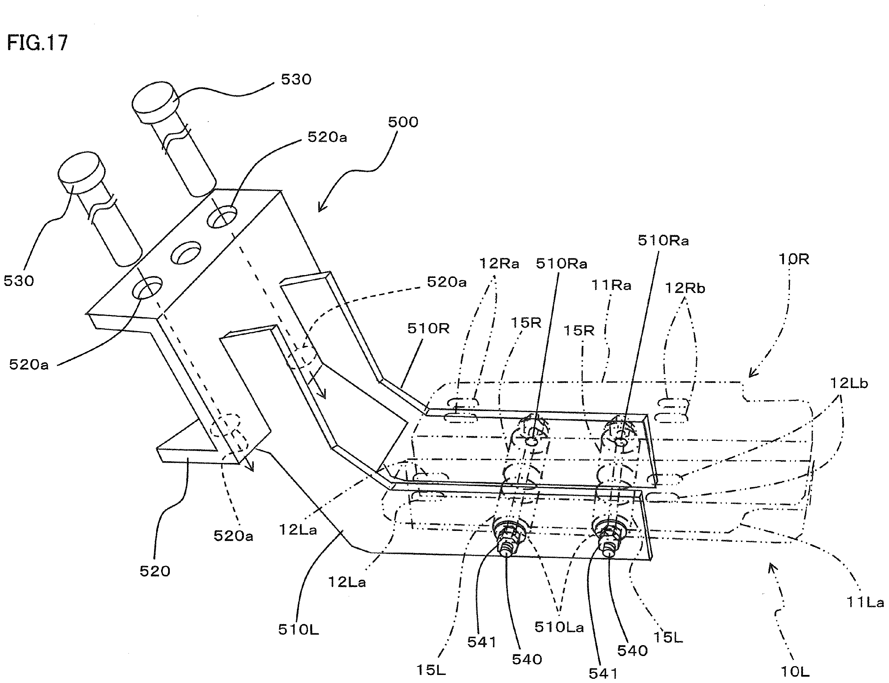

As shown in FIG. 1 to FIG. 4, the walking type tiller 1 of the present embodiment is provided with (1) a machine-body frame 10, (2) an engine 20, (3) a muffler 100, (4) a muffler cover 120, (5) a muffler guard 140, and (6) a fuel tank 30. The walking type tiller 1 is constituted in such a manner that a driving power from an engine 20 is transmitted to a tilling device 60, which has a plurality of tilling claws 60a, via a belt drive mechanism 200.
(1) The machine-body frame 10 has a pair of right and left front frames 10L and 10R whose upper end parts are bent to opposite directions (in a right-and-left direction) and in the roughly L-shaped form in a front view as a pair of right and left bent parts 11La and 11Ra, and which are long with respect to the front-and-rear direction of the machine body. These right and left front frames 10L and 10R keep a prescribed distance in the width direction of the machine body, and are fixed to each other by fastening parts (not shown).
(2) The engine 20 is disposed rearwardly, obliquely and upwardly from the machine body by fixing a bottom part side of the engine 20 to the pair of right and left bent parts 11La and 11Ra with bolts 12b through elongated holes 12La, 12Lb and 12Ra, 12Rb (see FIG. 17) which are formed at the front and rear positions of the pair of right and left bent parts 11La and 11Ra of the right and left front frames 10L and 10R.
(3) The muffler 100 is disposed above the engine 20 in order to reduce an exhaust sound of the engine 20.
(4) The muffler cover 120 covers the muffler 100.
(5) The muffler guard 140 covers the muffler cover 120, and is disposed so as to prevent the operator from erroneously touching the muffler cover 120.
(6) The fuel tank 30 is disposed above the bottom part side of the engine 20 and is disposed at the front side of the muffler guard 140.

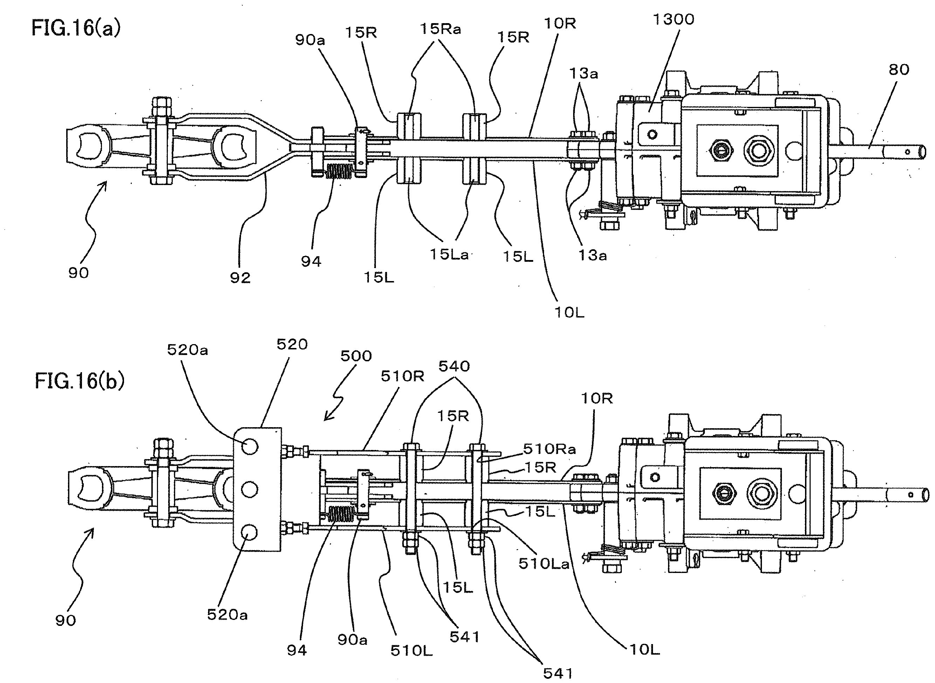

By the way, a pair of right and left cylindrical bosses 15L and 15R which have through holes 15La and 15Ra are fixed to the pair of right and left front frames 10L and 10R (see FIG. 3), and the through holes 15La and 15Ra are located to the symmetrical positions of the pair of right and left front frames 10L and 10R. These cylindrical bosses 15L and 15R are used to mount a front weight mounting member 500 to the pair of right and left front frames 10L and 10R. By the way, the descriptions of the front weight mounting member 500 will be given later with reference to FIG. 16 and the like furthermore.

Additionally, the walking type tiller 1 of the present embodiment is provided with (1) a main transmission case 1300 and (2) a sub-transmission case 1400.
(1) The main transmission case 1300 houses a main speed change mechanism (300) that transmits the driving power transmitted via the belt drive mechanism 200 to the tilling device 60 in a manner to be capable of speed changing.
(2) The sub-transmission case 1400 is disposed between the belt drive mechanism 200 and the main transmission case 1300, is a sealing type transmission case, and houses a sub-speed change mechanism 400 that changes the driving power transmitted from the belt drive mechanism 200 into either low speed or high speed selectively and transmits the driving power changed into low speed or high speed to the main speed change mechanism 300.

By the way, center parts of front side butting parts of the main transmission case are fixed to a rear end part of the machine-body frame 10 with the tightening member 13a such as bolts, nuts, or the like (see FIG. 1), and center parts of rear side butting parts of the main transmission case are fixed to a front end part of an implement-hitching part 50 with the tightening member 13b such as bolts, nuts, or the like (see FIG. 1).

Additionally, as shown in FIG. 3, the belt drive mechanism 200 is provided with an output pulley 21, an input pulley 201, a transmission belt 210, and a tension roller mechanism 250. The output pulley 21 is fixed to the tip part of an output shaft 20a which protrudes toward the left side of the engine 20. The input pulley 201 is fixed to the tip part of an input shaft 401 which protrudes toward the left side of the sub-transmission case 1400. The transmission belt 210 is wound between the output pulley 21 and the input pulley 201, and transmits the driving power from the engine 20 to the sub-speed change mechanism 400 which is housed in the sub-transmission case 1400. The tension roller mechanism 250 has a main clutch function capable of carrying out the connection and disconnection of the driving power from the engine 20 by applying a tension or no tension to the transmission belt 210.

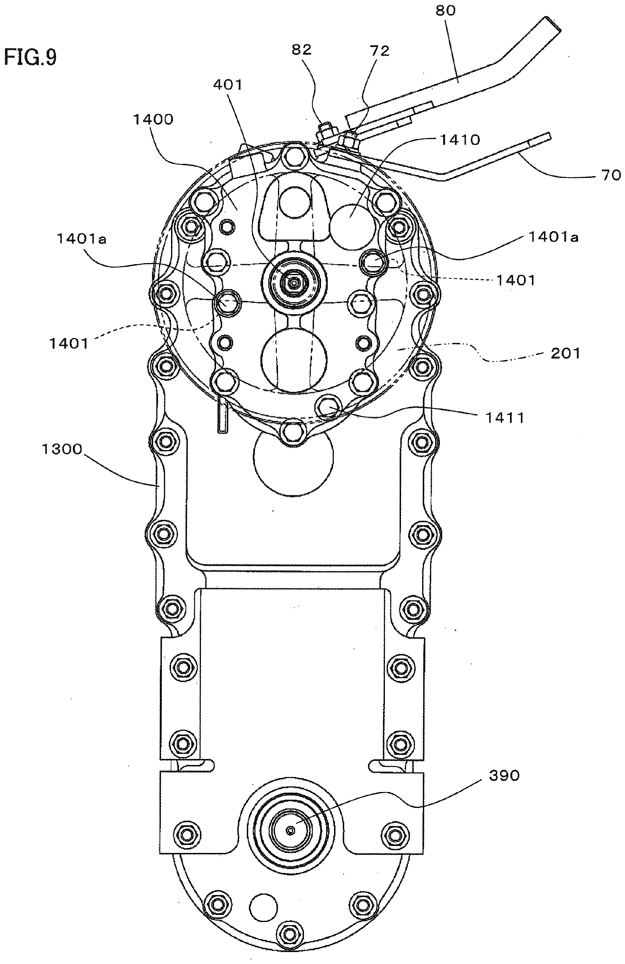

By the way, the descriptions of the main speed change mechanism 300 and the sub-speed change mechanism 400 will be given later furthermore with reference to FIG. 9 to FIG. 14.

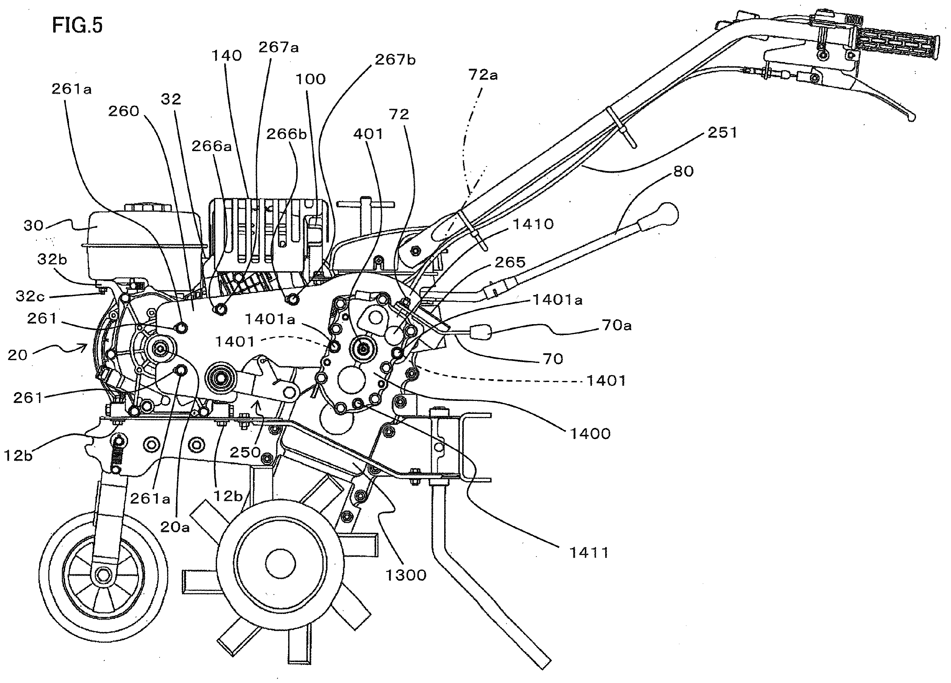

Furthermore, the walking type tiller 1 of the present embodiment is provided with (1) an operating handle 40, (2) a sub-speed changing lever 70, (3) a main speed changing lever 80, (4) a belt left cover 220 and a belt right cover 230, (5) a resistance bar 55, and (6) a transport wheel part 90.
(1) Regarding the operating handle 40, as shown in FIG. 1 and FIG. 2, the right end and the left end of the operating handle 40 are fixed to a handle support plate 42. The handle support plate 42 is mounted on a handle bracket 130 which is fixed on the upper part of the main transmission case 1300. Moreover, the operating handle 40 is arranged so as to extend rearwardly, obliquely and upwardly from the machine body, in a side view, and so as to extend in the right-and-left direction, rearwardly, and in the roughly V-shaped form in a plan view.
(2) The sub-speed changing lever 70, as shown in FIG. 4 and FIG. 5, is disposed on an upper part of the sub-transmission case 1400 so as to be capable of being turned in the right-and-left direction of the machine body in the plan view, and is capable of changing the speed change ratio to any one stage of two stages, that is, to any one stage of a high-speed stage (high-speed ratio) and a low-speed stage (low-speed ratio).
(3) The main speed changing lever 80, as shown in FIG. 5 and FIG. 9, is disposed on an upper part of the main transmission case 1300 so as to be capable of being turned in the right-and-left direction of the machine body in the plan view, and is capable of changing the rotation of the tilling claws 60a to any one mode of five modes of backward-movement, neutral, high-speed, neutral, and low-speed modes.
(4) The belt left cover 220 (see FIG. 1 and FIG. 2) covers the transmission belt 210 (see FIG. 3) from the left side, and the belt right cover 230 (see FIG. 2 to FIG. 4) covers the transmission belt 210 from the right side.
(5) The resistance bar 55 is mounted on the implement-hitching part 50 so as to be capable of adjusting the height of the resistance bar 55, and used for performing the suppression of forward travel speed and the like.
(6) The transport wheel part 90 is turnably arranged about a turning shaft 90a which is disposed on the front side of the machine-body frame 10, and a posture of the transport wheel part 90 can be changed to any one of a posture for moving and a posture for tilling by a tension spring 94.

By the way, the front end part of the handle bracket 130 is provided with a protruding part 170 where a muffler guard fixing hole (not shown) is disposed (see FIG. 1 and FIG. 3).

Additionally, as shown in FIG. 1 and FIG. 2, the transport wheel part 90 has a wheel 91, a pair of right and left supporting arms 92, and a front plate 93 which has a roughly Y-shaped form.

The pair of right and left supporting arms 92 supports a rotary shaft 91a of the wheel 91 rotatably at one end side of the pair of right and left supporting arms 92, and is connected to the machine-body frame 10 rotatably at the other end side thereof. The front plate 93 has a roughly Y-shaped form in a plan view (see FIG. 2), a center part of the front plate 93 is provided with a recessed part 93a, and both sides thereof extend along the supporting arms 92. The recessed part 93a is configured in accordance with the shape of the wheel 91.

By connecting the pair of right and left supporting arms 92 using the front plate 93, in a case where the wheel 91 collides slantingly to an obstacle during work, the deformation of the pair of right and left supporting arms 92 can be suppressed. By providing the recessed part 93a, the function as the scraper which removes the mud which stuck to the wheel 91 can be also achieved.

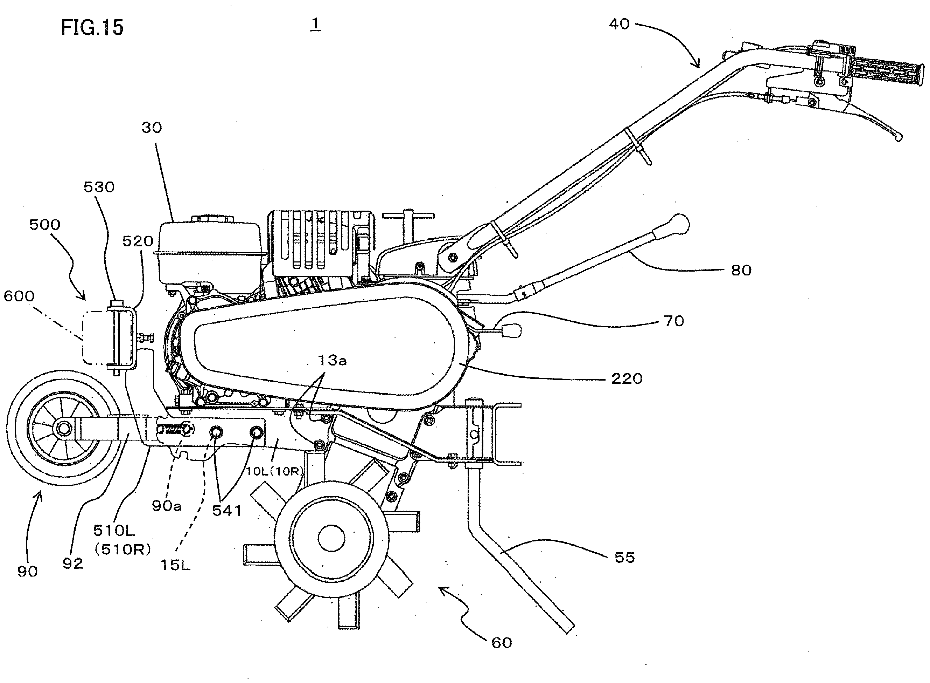

Incidentally, the transport wheel part 90 in the posture for the movement is indicated by FIGs. 1 and 3, and the transport wheel part 90 in the posture for tilling is indicated by FIGs. 2 and 4. During the movement, the operator lifts the operating handle 40 with the operator's hands, and brings the transport wheel part 90 into contact with the ground to move. FIG. 15 shows the transport wheel part 90 in the posture for tilling in a left side view.

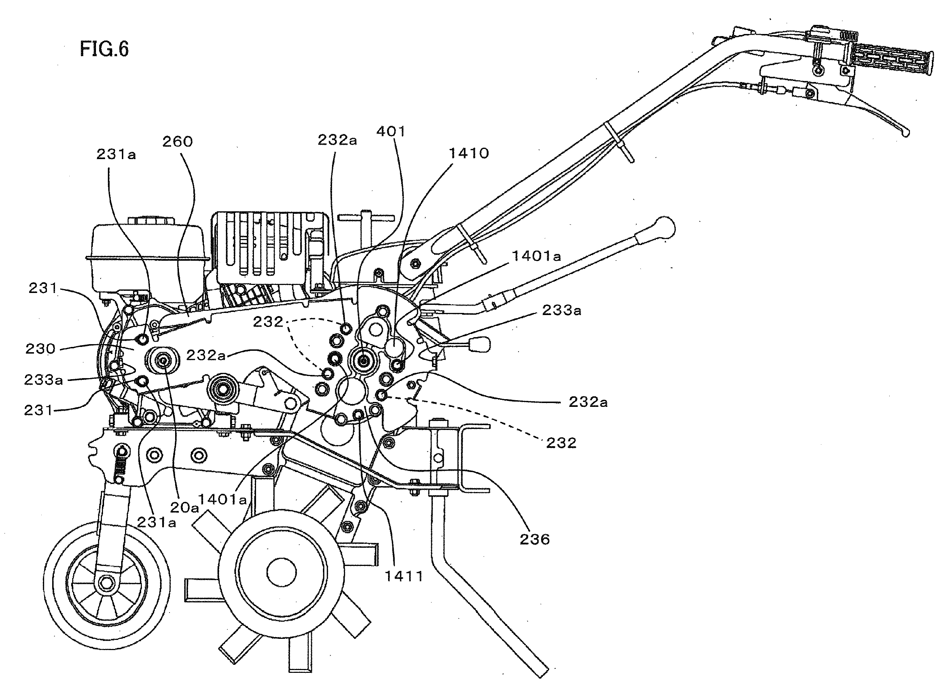

Next, mainly referring to FIG. 5 and 6, descriptions are given mainly regarding an arrangement relation between a connecting plate 260 and the belt right cover 230. The connecting plate 260 connects the main transmission case 1300 and the engine 20, and connects the sub-transmission case 1400 and the engine 20.

FIG. 5 is a left side view of the walking type tiller 1 in the present embodiment and shows a state in which the output pulley 21, the input pulley 201, and the belt right cover 230 are removed from the walking type tiller 1 shown in FIG. 3. FIG. 6 is a left side view of the walking type tiller 1 in the present embodiment and shows a state in which the belt right cover 230 is attached to the walking type tiller 1 shown in FIG. 5.

In the case of the walking type tiller 1 in the present embodiment, as shown in FIG. 4, in a plan view and with reference to the right-and-left direction of the machine body, the belt right cover 230 is arranged on the left side of the sub-transmission case 1400. The connecting plate 260 is arranged between the sub-transmission case 1400 and the main transmission case 1300 that is arranged on the right side of the sub-transmission case 1400.

As shown in FIG. 5, the connecting plate 260 is fixed to the engine 20 by two bolts 261a which are inserted to the elongated holes 261 that are disposed at two positions which correspond to the upper and lower positions of the front end side of the connecting plate 260, and is fixed between the main transmission case 1300 and the sub-transmission case 1400 by two bolts 1401a which are inserted from two though holes 1401 to though holes (not shown), which are disposed at two positions of the rear side of the connecting plate 260, to be fastened to the main transmission case 1300. These two though holes 1401 are disposed on front side butting parts and rear side butting parts of the sub-transmission case 1400.

That is, the two bolts 1401a have both functions of fixing the sub-transmission case 1400 to the main transmission case 1300 and fixing the rear end part of the connecting plate 260 between the main transmission case 1300 and the sub-transmission case 1400.

By means of this, a special member to fix the rear end side of the connecting plate 260 is not required.

Additionally, since the engine 20 can be moved forward and backward by loosening two bolts 261a, it is possible to adjust the interval between the output shaft 20a of the engine 20 and the input shaft 401 of the sub-speed change mechanism 400. After the adjustment, the bottom side of the engine 20 can be securely fixed to bent part 11La (11Ra) by the bolts 12b (see FIG. 1 and FIG. 5) through the elongated holes 12La, 12Lb (12Ra, 12Rb) (see FIG. 17) of the bent part 11La (11Ra) of the machine body frame 10 while keeping the interval between the output shaft 20a of the engine 20 and the input shaft 401 of the sub-speed change mechanism 400 by the connecting plate 260.

Additionally, as shown in FIG. 6, the belt right cover 230 is fixed to the engine 20 by two bolts 231a which are inserted to the elongated holes 231 that are disposed at two positions which correspond to the upper and lower positions of the front end side of the belt right cover 230, and is fixed to the sub-transmission case 1400 by bolts 232a which are inserted to the elongated holes 232 that are disposed at the positions which correspond to the front end side of the belt right cover 230.

The front end part and the rear end part of the belt right cover 230 are bent to the left side at a right angle in a plan view (see FIG. 4), and a nut 233a, which is used for attaching the belt left cover 220 to the belt right cover 230 by the bolts 221a (see FIG. 2), is fixed on each inside of both the front end part and the rear end part of the belt right cover 230 by welding, so that the belt left cover 220 is capable of being attached to and detached from the belt right cover 230.

By means of this, the dimension of width W in the right-and-left direction (see FIG. 2) of the belt left cover 220 can be reduced as compared to a case, for example, where the belt left cover 220 is attached to the connecting plate 260. Additionally, the belt left cover 220 can be used commonly when the sub-transmission case 1400 is provided and when the sub-transmission case 1400 is not provided.

By means of the above described configuration, the sub-transmission case 1400 can be removed by removing the belt left cover 220, the transmission belt 210, the output pulley 21, the input pulley 201 (see FIG. 3), and the belt right cover 230.

That is, since the sub-transmission case 1400 can be attached to and detached from the main transmission case 1300 without disjointing the sub-transmission case 1400 and without extracting the lubricating oil existing inside the sub-transmission case 1400, the maintenance property is improved.

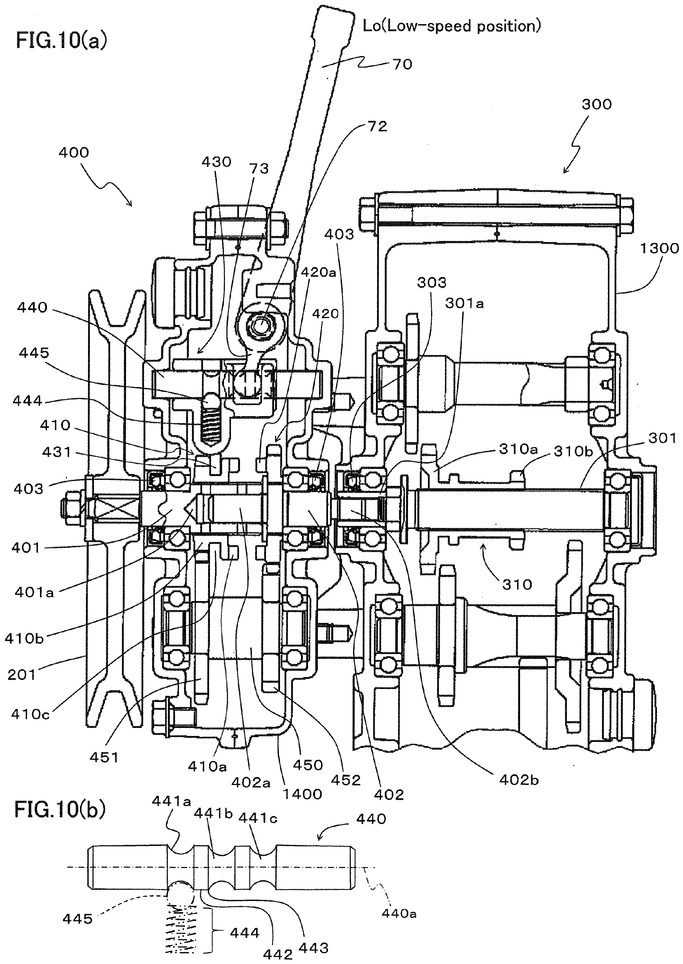

The tip part 402b of the output shaft 402 of the sub-speed change mechanism 400 which is housed in the sub-transmission case 1400 is spline-coupled to an input shaft 301 of the main speed change mechanism 300 which is housed in the main transmission case 1300 to transmit the driving power (see FIG. 10). Regarding this matter, the descriptions will be given later furthermore.

As shown in FIG. 6, the sub-transmission case 1400 can be removed by removing the two bolts 231a, which fix the front end side of the belt right cover 230 and the engine 20, and the two bolts 1401a, which fix the sub-transmission case 1400 to the main transmission case 1300, while the belt right cover 230 is attached to the sub-transmission case 1400. At this time, the sub-transmission case 1400 and the belt right cover 230 can be integrally removed.

After that, by further removing the two bolts 261a (see FIG. 5), which fix the front end side of the connecting plate 260 to the engine 20, the connecting plate 260 can be removed. At this time, bolts 267a and 267b are required to be removed because the muffler guard 140 is fixed to the connecting plate 260 with the bolts 267a and 267b. But since the connecting plate 260 also has a function as a fixing plate for the muffler guard 140, another member, which is used for fixing the left side of the muffler guard 140, is not required.

By means of this, the maintenance property is improved.

The front end part of the connecting plate 260, as described above utilizing FIG. 5, is fixed to the engine 20 by the bolts 261a on a rear side of the output shaft 20a of the engine 20, and the belt right cover 230, as described above utilizing FIG. 6, is fixed to the engine 20 by the bolts 231a on a front side of the output shaft 20a of the engine 20. By means of this, the assembling operation is facilitated and the maintenance property is improved.

As described above, the sub-transmission case 1400 which houses the sub-speed change mechanism 400 that has two speed change ratios which consist of a high-speed change stage and a low-speed change stage is added to the main transmission case 1300, so that the number of speed change stages of the walking type tiller 1 of the present embodiment can be doubled as compared to the conventional walking type tiller which is not provided with the sub-transmission case 1400.

Additionally, since the sub-transmission case 1400, which contains the lubricating oil and is the sealing type transmission case, can be attached to the outside of the main transmission case 1300, the assembling operation is easy.

Additionally, since the sub-transmission case 1400 can be disposed by utilizing the belt drive mechanism and the like of the conventional walking type tiller which is not provided with the above described sub-transmission case 1400, it is unnecessary to prepare new dies which are used for production of the belt left cover 220, the belt right cover 230, and the like, so that it is possible to suppress a new facility investment.

Additionally, the rear end upper part of the connecting plate 260 is provided with a changing operation panel 265 that can indicate which mode is chosen between the Hi mode (high-speed mode) and the Lo mode (low-speed mode), by utilizing the position of a sub-speed changing lever 70 (see FIG. 2 and FIG. 5).

By means of this, since the changing operation panel 265 can be arranged at a position near to the sub-transmission case 1400, a size of the changing operation panel 265 can be made compact.

Additionally, the changing operation panel 265 is disposed between the connecting plate 260 and the belt right cover 230 in a plan view, so that the changing operation panel 265 can be arranged at a position near to the sub-speed changing lever 70, and thus the display on the changing operation panel 265 is easily observed.

Additionally, a grip part 70a of the sub-speed changing lever 70 is disposed on the rear side of the changing operation panel 265, so that the grip part 70a can be located at a position near to the operator, and thus the operator can easily operate it (see FIG. 2 and FIG. 5).

The turning fulcrum 71 of the sub-speed changing lever 70 is provided on the front side, in a plan view, of the changing operation panel 265 (see FIG. 2), so that the operation direction of the sub-speed changing lever 70 becomes the same direction as the position of "Hi" and "Lo" displayed on the changing operation panel 265, and thus the operation of the changing operation panel 265 is user-friendly.

Since the sub-speed changing lever turning shaft 72 which has the turning fulcrum 71 of the sub-speed changing lever 70 is inclined backward (see FIG. 5) in a side view, the grip part 70a of the sub-speed changing lever 70 can be arranged at a position near to the operator without lengthening the sub-speed changing lever 70. In FIG. 5, an axial direction 72a of the sub-speed changing lever turning shaft 72 is indicated by the two-dot chain line.

Since the grip part 70a of the sub-speed changing lever 70 is disposed below the main speed changing lever 80 in a side view, the operator can operate the sub-speed changing lever 70 without interference between the sub-speed changing lever 70 and the main speed changing lever 80 (see FIG. 5).

The grip part 70a of the sub-speed changing lever 70 is disposed below the main speed changing lever 80 in a side view, so that even if the turnable range of the main speed changing lever 80 is increased by increasing the number of speed change stages, the operator can operate the sub-speed changing lever 70 without interference between the sub-speed changing lever 70 and the main speed changing lever 80 (see FIG. 2 and FIG. 5).

Additionally, as shown in FIG. 2, when the sub-speed changing lever 70 is located at the "Lo" position and the main speed changing lever 80 is located at the "Lo" position, the grip part 70a of the sub-speed changing lever 70 is located in a position overlapping with the main speed changing lever 80 in a plan view. But, as described above, since the grip part 70a of the sub-speed changing lever 70 is disposed below the main speed changing lever 80 in a side view, the interference between the sub-speed changing lever 70 and the main speed changing lever 80 can be prevented, and thus it is unnecessary to arrange the sub-speed changing lever 70 outside. Therefore, the grip part 70a can be located at a position near to the operator, and thus the operator can easily operate it.

Additionally, as shown in FIG. 4, a guard plate 235 which prevents the objects from being wound to the output shaft 20a of the engine 20 is disposed between the belt right cover 230 and the connecting plate 260. The guard plate 235 is roughly rectangular in a plan view, and has a roughly L-shaped bent part which is bent downward along the belt right cover 230. The guard plate 235 is integrally configured with the belt right cover 230 by welding the bent part to the belt right cover 230.

By means of this, the assemblability can be improved and the number of parts can be reduced.

Next, a configuration with respect to a lubricating oil inlet plug 1410 of the sub-transmission case 1400 is described utilizing FIG. 3, FIG. 5, and FIG. 6.

As shown in FIG. 5 and FIG. 6, the sub-transmission case 1400 is provided with the lubricating oil inlet plug (and oil surface level detection plug) 1410 and a drain plug 1411 for discharging the lubricating oil, and the lubricating oil inlet plug 1410 and the drain plug 1411 are arranged on the same side as a side for arranging the belt right cover 230.

Additionally, as shown in FIG. 6, the belt right cover 230 has a notched part of the shape of a limb of the sea in a side view. The notched part is a region 236 which includes the areas that correspond at least to the lubricating oil inlet plug 1410, the drain plug 1411, and the input shaft 401.

Furthermore, as shown in FIG. 3, the input pulley 201 is provided with a visual recognizing hole 201a through which the lubricating oil inlet plug 1410 and the drain plug 1411 can be viewed.

By means of this, by removing the belt left cover 220, the lubricating oil inlet plug 1410 can be viewed and can be removed without removing the input pulley 201 and the belt right cover 230, so that the confirmation of the lubricating oil level and the supplement of the lubricating oil can be easily performed, and thus the maintenance property is improved.

Additionally, by means of this, by removing the belt left cover 220 and the input pulley 201, the drain plug 1411 can be viewed and can be removed without removing the belt right cover 230, so that discharging of the lubricating oil can be easily performed, and thus the maintenance property is improved. After discharging of the lubricating oil, by attaching the drain plug 1411 and removing the lubricating oil inlet plug 1410 to supply the lubricating oil, all of the lubricating oil can be changed.

Additionally, a main clutch cable 251 (see FIG. 5) which allows the tension roller mechanism 250 to switch connection and disconnection of transmission of the driving power is disposed between the main transmission case 1300 and the connecting plate 260, and thus the assemblability can be improved.

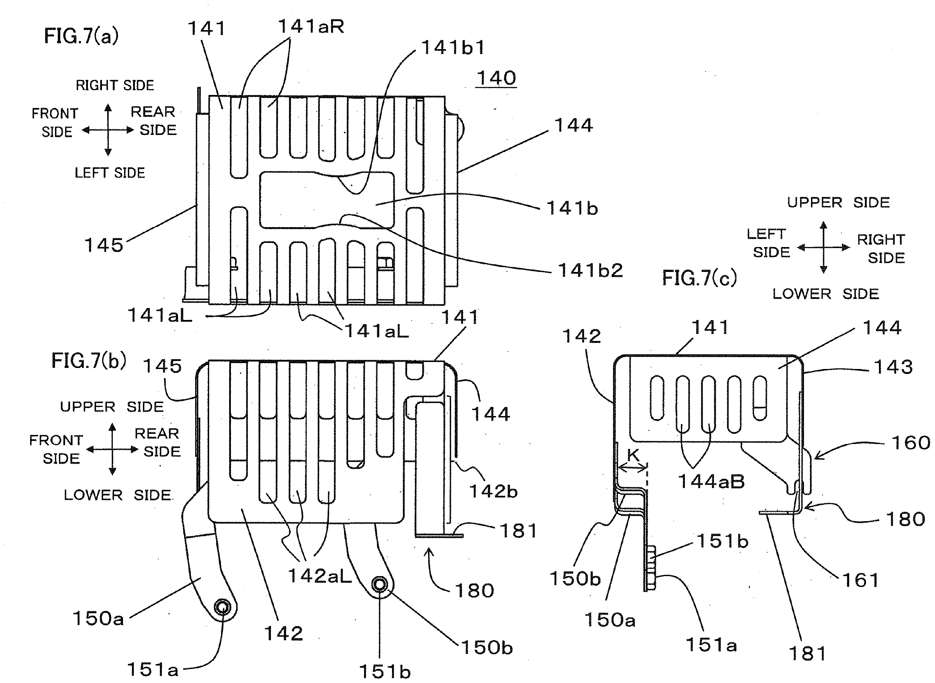

Next, mainly referring to FIG. 7(a) to FIG. 8(c), descriptions are given regarding a fixing structure of the above described muffler guard 140.

First of all, descriptions are given regarding a configuration of the muffler guard 140.

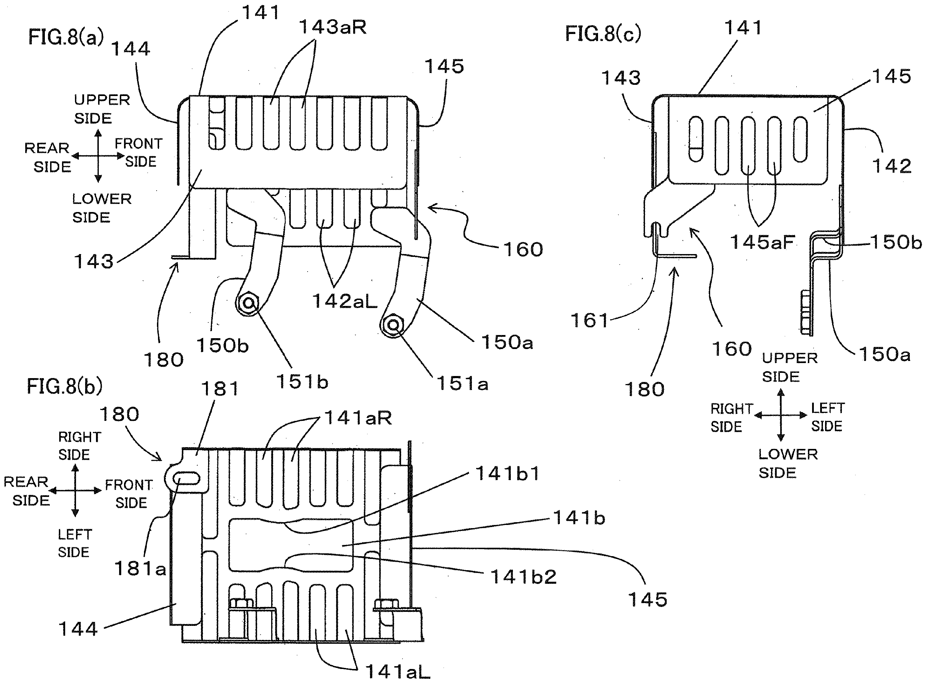

Here, FIG. 7(a) is a plan view of the muffler guard 140, FIG. 7(b) is a left side view of the muffler guard 140, and FIG. 7(c) is a rear side view of the muffler guard 140. Moreover, FIG. 8(a) is a right side view of the muffler guard 140, FIG. 8(b) is a bottom view of the muffler guard 140, and FIG. 8(c) is a front view of the muffler guard 140.

As shown in FIG. 7(a) to FIG. 7(c), and FIG. 8(a) to FIG. 8(c), the muffler guard 140 is a guard member which covers each surface of an upper surface, right-and-left side surfaces, a front surface, and a rear surface of the muffler cover 120 (see FIG. 1) in a state where the muffler guard 140 is allowed to stay away from each surface by a predetermined distance, and plural upper surface slits 141aL and 141aR are formed on the right and left sides except the center part of the upper surface 141 of the muffler guard 140 (see FIG. 7(a)).

Additionally, a long hole 141b which is long with respect to the front-and-rear direction of the machine body is formed at a center part of an upper surface 141 of the muffler guard 140.

By means of this, since opening parts such as the upper surface slits 141aL, 141aR, and the elongated hole 141b are formed at each part on the muffler guard 140 corresponding to the high temperature parts of the muffler cover 120 (see FIG. 1), the surface temperature of the muffler guard 140 can be kept low.

Additionally, a pair of right and left arcuate projecting parts 141b1 and 141b2 are arranged on the central neighborhood with respect to the long-side direction of the elongated hole 141b so as to protrude from both right and left sides of the elongated hole 141b in order to satisfy European safety standards. The pair of right and left projecting parts 141b1 and 141b2 become resistances members, so that the structure in which a specific tool cannot enter the elongated hole is formed. By means of this, the surface temperature of the muffler guard 140 does not rise too much and the height of the muffler guard 140 can be made low, so that a burn-prevention effect is exerted when the operator touches the muffler guard 140 by mistake.

Additionally, as shown in FIG. 7(b), plural left side slits 142aL which communicate with plural upper surface slits 141aL of the left side of the upper surface 141 (see FIG. 7(a)) are formed on the left side surface 142 of the muffler guard 140. Moreover, as shown in FIG. 7(b), a notch part 142b is formed at the rear side corner part of the left side surface 142 of the muffler guard 140.

That is, in the present embodiment where an exhaust port 101 (see FIG. 1) of the muffler 100 is disposed on the left side of the machine body, the notch part 142b is formed in accordance with the exhaust direction. By means of this, it is possible to prevent the high temperature exhaust gas, which is exhausted from the exhaust port 101, from blowing the left side surface 142 of the muffler guard 140 directly, and it is possible to restrain a rise of the surface temperature of the muffler guard 140. By means of this, the burn-prevention effect is exerted when the operator touches the muffler guard 140 by mistake.

Additionally, as shown in FIG. 8(a), plural right side slits 143aR which communicate with plural upper surface slits 141aR of the right side of the upper surface 141 are formed on the right side surface 143 of the muffler guard 140.

Additionally, as shown in FIG. 7(c), plural rear side slits 144aB are formed on the rear side surface 144 on the muffler guard 140.

Additionally, as shown in FIG. 8(c), plural front side slits 145aF are formed on the front side surface 145 on the muffler guard 140.

Additionally, as shown in FIG. 7(b), a first front stay 150a and a first rear stay 150b, which fix the muffler guard 140 to the belt right cover 230 of the belt drive mechanism 200, are fixed on the front side of the lower end part and a rear side of the lower end part of the left side surface 142 of the muffler guard 140, respectively. Regarding the first front stay 150a and the first rear stay 150b, as shown in FIG. 7(c), each center part of the first front stay 150a and the first rear stay 150b is bent at a roughly right angle to the inside of the muffler guard 140, has a straight part of a predetermined distance K, and is bent at a roughly right angle to the lower side again (see FIG. 7(c)). Nuts 151a and 151b are fixed on the lower end parts of the first front stay 150a and the first rear stay 150b beforehand, respectively.

Additionally, as shown in FIG. 8(c), a second stay 160 for the co-fastening fixation between the muffler guard 140 and the fuel tank 30 is fixed on the lower end part of the front side surface 145 of the muffler guard 140. The distal end part of the second stay 160 is provided with a notch part 161 in which the co-fastening bolt is inserted.

Additionally, as shown in FIG. 7(b), a third stay 180 for the co-fastening fixation between the muffler guard 140 and the protruding part 170 which is provided with the muffler guard fixing hole 170a is fixed on the rear end part of the right side surface 143 of the muffler guard 140. An elongated hole 181a (see FIG. 8(b)) which is long with respect to the front-and-rear direction of the machine body is formed at an L-shaped bent part 181 which is formed at the distal end part of the third stay 180.

Next, mainly referring to FIG. 1 and FIG. 5, descriptions are given furthermore regarding the fixing structure of the muffler guard 140.

That is, as for the front side of the muffler guard 140, the notch part 161 (see FIG. 8(c)) of the second stay 160 is inserted to the bolt (not shown), and the muffler guard 140 is fixed to a tank-fixation stay 32 together with the fuel tank 30 by a fastening nut (not shown). Here, the bolt protrudes to the rearward from the fuel tank 30 side via a through-hole (not shown) which is disposed, in the front-and-rear direction, in the tank-fixation stay 32 which protrudes to the upward from the upper outer wall of the engine 20 (see FIG. 1 and FIG. 5).

Incidentally, the fixation of the muffler guard 140 by the second stay 160 is not limited to the configuration described above and, for example, such a configuration may be allowed that the fastening nut is welded to the side surface of the fuel tank 30 beforehand so that the bolt is inserted from the notch part 161 side of the second stay 160 to the through-hole, and is fitted with the fastening nut to be fastened (see FIG. 1 and FIG. 5).

Since the front part of the fuel tank 30 is fixed to left and right tank-fixation stays 32b and 32b, which protrude to the upward from the upper outer wall of the engine 20, with a bolt 32c, the fuel tank 30 in itself is also installed stably (see FIG. 1 and FIG. 5).

As for the rear side of the muffler guard 140, the elongated hole 181a of the third stay 180 is adjusted to the position of the muffler guard fixing hole (not shown), and the muffler guard 140 is fixed by a bolt and a nut. Here, as described above, the muffler guard fixing hole is disposed on the protruding part 170 which is disposed on the front end part of the handle bracket 130 (see FIG. 1).

As for the left side of the muffler guard 140, the muffler guard 140 is fixed by two bolts 267a and 267b (see FIG. 5) which are inserted to the nuts 151a and 151b (see FIG. 8(a)) from the left side surface of the connecting plate 260 (see FIG. 5) via the two elongated holes 266a and 266b. Here, as described above, the nuts 151a and 151b are disposed on the lower end parts of the first front stay 150a and the first rear stay 150b beforehand. Moreover, two elongated holes 266a and 266b are disposed on the upper end part of the connecting plate 260.

Since the muffler guard 140, as described above, is fixed to each portion of the machine body via three parts of the front side, the rear side, and the left side of the muffler guard 140, it is possible to reduce shaking of the muffler guard 140 caused by the vibration from the engine 20.

Additionally, as described above, since the muffler guard 140 is not fixed to the high temperature body of the muffler 100 and is fixed to the places where the temperature is low, it is possible to prevent the temperature of the muffler guard 140 from becoming high.

Moreover, as described above, since a step of the predetermined distance K is disposed on the first front stay 150a and the first rear stay 150b, the left side surface 142 of the muffler guard 140 is located in a position away from the left side surface (not shown) of the muffler cover 120 by about distance K when the muffler guard 140 is fixed to each part of the machine body.

By means of this, since the left side surface 142 of the muffler guard 140 is allowed to be located in the position away from the high temperature muffler cover 120 by a predetermined distance, it is possible to restrain a rise of the surface temperature of the muffler guard 140, and the burn-prevention effect is exerted when the operator touches the muffler guard 140 by mistake.

Next, the descriptions of the main speed change mechanism 300 and the sub-speed change mechanism 400 will be given furthermore with reference to FIG. 9 to FIG. 14.

FIG. 9 is a left side view which indicates the state where the sub-transmission case 1400 is attached to the main transmission case 1300.

FIG. 10(a) is a schematic sectional view which is viewed from the lower side and indicates the configuration of the sub-speed change mechanism 400 that is housed in the sub-transmission case 1400, and the connection relation between the sub-speed change mechanism 400 and the main speed change mechanism 300 that is housed in the main transmission case 1300. Additionally, FIG. 10(a) is a schematic sectional view which indicates a state in which the sub-speed changing lever 70 is set at a low-speed position. FIG. 10(b) is an enlarged side view of a shifter stay 440 in the sub-speed change mechanism 400 shown in FIG. 10(a).

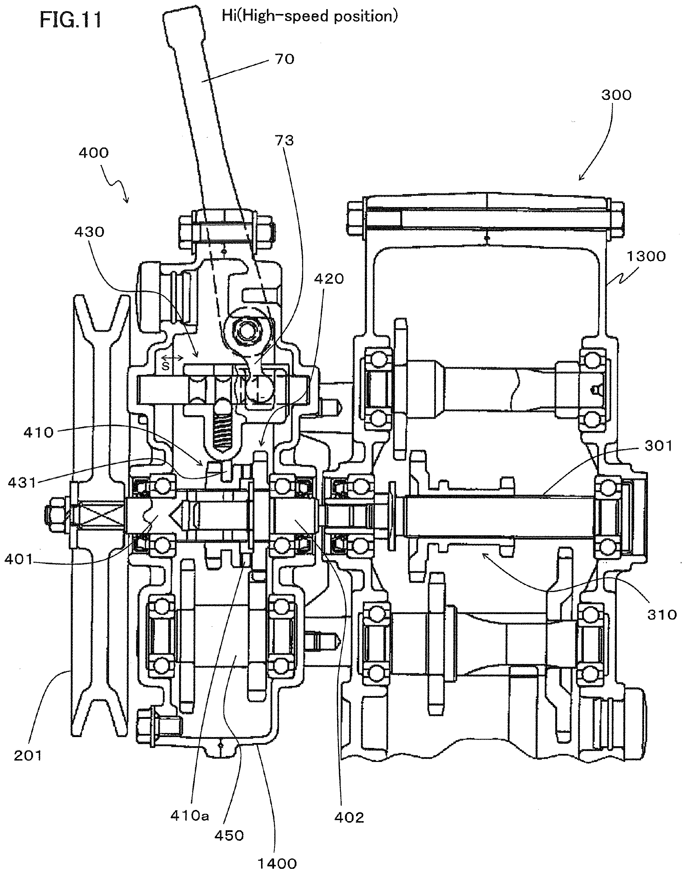

FIG. 11 is a schematic sectional view which is viewed from the lower side, indicates the configuration of the sub-speed change mechanism 400 that is housed in the sub-transmission case 1400, and indicates a state in which the sub-speed changing lever 70 is set at a high-speed position.

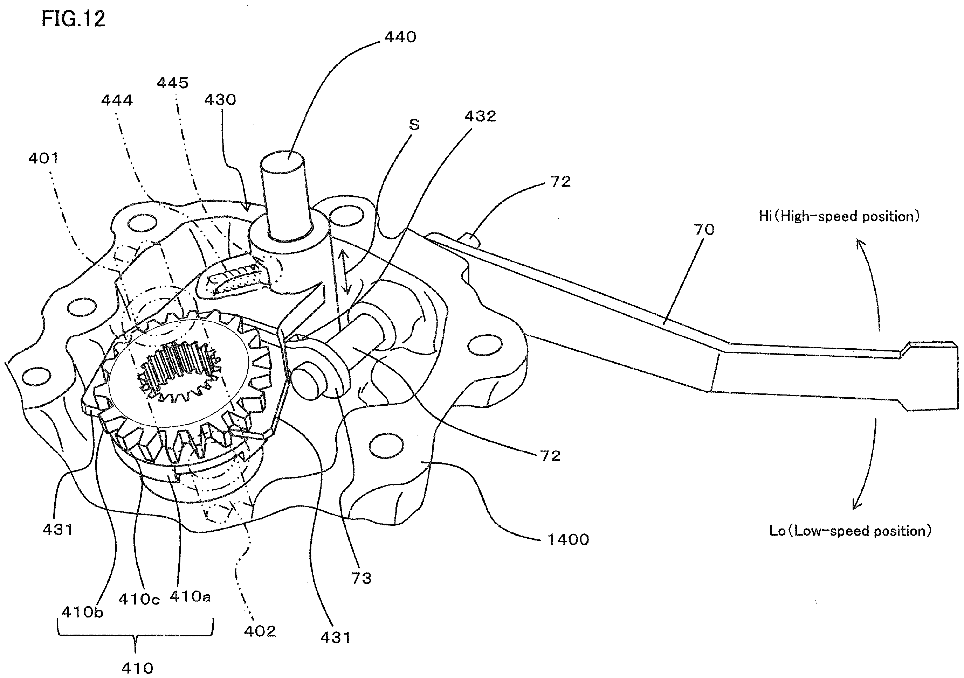

FIG. 12 is a partial enlarged perspective view of the sub-speed change mechanism 400 that is housed in the sub-transmission case 1400.

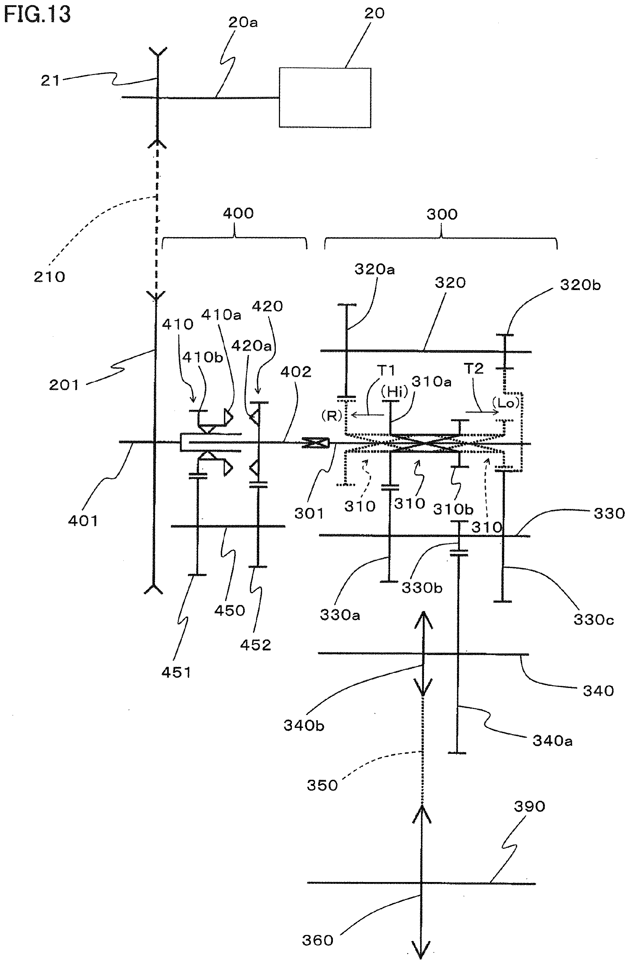

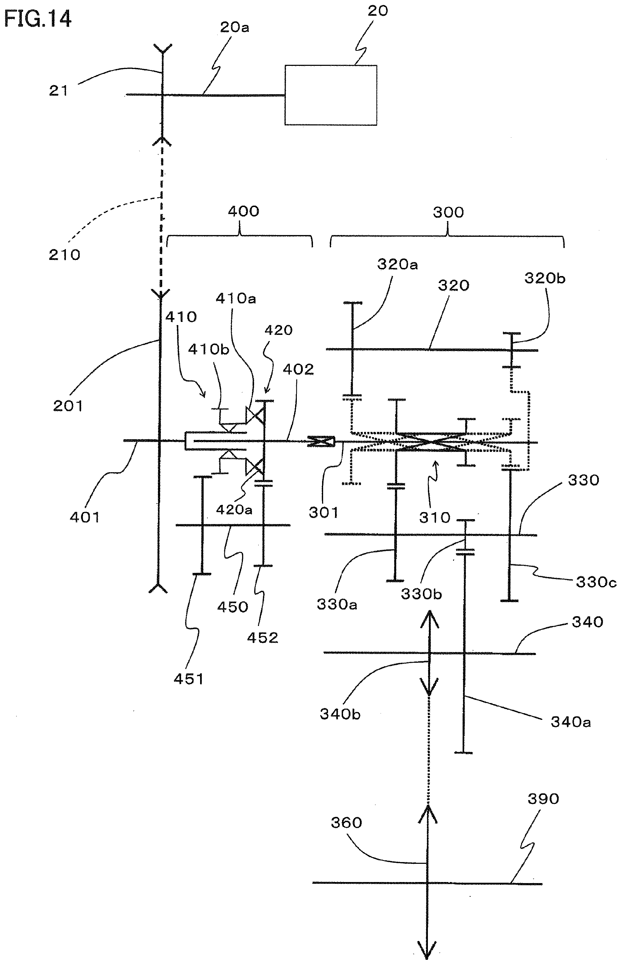

FIG. 13 is a transmission path diagram which mainly indicates the sub-speed change mechanism 400 and the main speed change mechanism 300, and the state of the sub-speed change mechanism 400 in a case where the sub-speed changing lever 70 is set at the low-speed position. FIG. 14 is a transmission path diagram which mainly indicates the sub-speed change mechanism 400 and the main speed change mechanism 300, and the state of the sub-speed change mechanism 400 in a case where the sub-speed changing lever 70 is set at the high-speed position.

As described above, the sub-transmission case 1400 is fixed to the main transmission case 1300 by the two bolts 1401a (see FIG. 9).

Additionally, as shown in FIG. 9, a main speed changing lever turning shaft 82 is turnably disposed on the depth side of the sub-speed changing lever turning shaft 72 which is shown in FIG. 9, that is, in a plan view, is turnably disposed on the right side of the sub-speed changing lever turning shaft 72 with reference to the right-and-left direction of the machine body.

By the way, the lower end part of the main transmission case 1300 is provided with a tilling shaft 390 to which the tilling device 60 having a plurality of tilling claws 60a is connected.

The sub-speed change mechanism 400 is provided with the input shaft 401 and the output shaft 402 which is rotatably and loosely fitted to the input shaft 401, as shown in FIG. 10. The input shaft 401 has one end side to which the input pulley 201, which reduces the driving power from the engine 20, is detachably fixed, and another end side where a hole part 401a is formed. The tip part 402a of the output shaft 402 is rotatably inserted into the hole part 401a.

On the other hand, the output shaft 402 of the sub-speed change mechanism 400 is spline-coupled to the input shaft 301 of the main speed change mechanism 300.

That is, the tip part 402b of the output shaft 402 of the sub-speed change mechanism 400 is detachably inserted into a hole part which is formed inside the tip part 301a of the input shaft 301 of the main speed change mechanism 300, and transmits the driving power to the main speed change mechanism 300 side by the spline-coupling structure.

By means of this, the sub-transmission case 1400 which is in an assembled state can be easily assembled to the main transmission case 1300, so that the assembly and disassembly are easy, and the maintenance property is improved.

Additionally, an oil seal 403 is arranged on each outside of the bearing members which support the input shaft 401 and the output shaft 402 of the sub-speed change mechanism 400 respectively, that is, the oil seal 403 is arranged on each circumference of the input shaft 401 and the output shaft 402.

Additionally, an oil seal 303 is arranged on the outside of the bearing member which supports the tip part 301a of the input shaft 301 of the main speed change mechanism 300, that is, the oil seal 303 is arranged on the circumference of the tip part 301a of the input shaft 301.

By means of this, each quality confirmation of the sub-transmission case 1400 and the main transmission case 1300 can be performed singly, and thus the stable quality can be ensured because the assembly between the sub-transmission case 1400 and the main transmission case 1300 is carried out after confirmation of each quality. Incidentally, the quality confirmation includes a leak test, a load test, and the like.

A first gear unit 410, which is integrally formed by a first engagement claw part 410a, which has a plurality of uneven parts projecting in the shaft direction, and a first gear 410b, is movably spline-coupled to the input shaft 401 of the sub-speed change mechanism 400. The first gear unit 410 has a predetermined gap part 410c between the first engagement claw part 410a and the first gear 410b.

Additionally, a second gear unit 420, which has a second engagement claw part 420a which has a plurality of uneven parts, is fixed to the output shaft 402 of the sub-speed change mechanism 400. Furthermore, the second engagement claw part 420a is formed on the side face of the second gear unit 420 in a manner to be capable of being fitted to the uneven parts of the first engagement claw part 410a.

A sub-speed changing shifter 430, which is formed integrally with a shifter plate 431 which is inserted into the predetermined gap part 410c formed on the first gear unit 410, is arranged on a shifter stay 440 in a manner to be capable of slidably moving. The shifter stay 440 is fixed in the sub-transmission case 1400 so as to make a center axis 440a of the shifter stay 440 (see FIG. 10(b)) in parallel with a center axis (not shown) of the input shaft 401 of the sub-speed change mechanism 400.

On the other hand, as shown in FIG. 12, a slide arm 73, which is formed to slidably move the sub-speed changing shifter 430 on the shifter stay 440 in interlocking with moving of the sub-speed changing lever 70 to a predetermined position (see an arrow S indicated in FIG. 12), is fixed to the lower end part of the sub-speed changing lever turning shaft 72, and the tip part of the slide arm 73 is inserted into a hole part 432 formed on the sub-speed changing shifter 430. Incidentally, the sub-speed changing lever 70 is fixed to the upper end part of the sub-speed changing lever turning shaft 72.

Additionally, as shown in FIG. 10(b), the shifter stay 440 is provided with positioning grooves 441b, 441a, and 441c at the center position of the roughly columnar shaft and both side symmetrical positions of the center position, respectively. In a case where a positioning steel ball 445 which is energized by a spring 444 housed inside the sub-speed changing shifter 430 is inserted into any one of the positioning grooves 441a and 441b, the sub-speed changing shifter 430 can be positioned at the predetermined position, that is, at the low-speed or high-speed position.

Incidentally, in the present embodiment, in a case where the sub-speed changing shifter 430 is set at the low-speed position, the positioning steel ball 445 is inserted into the positioning groove 441a, and in a case where the sub-speed changing shifter 430 is set at the high-speed position, the positioning steel ball 445 is inserted into the positioning groove 441b.

By the way, the speed change stages are two speed change stages, that is, high-speed and low-speed stages. Therefore, only two positioning grooves for the shifter stay 440 need to be formed and, by forming the positioning groove 441c as a dummy groove on the shifter stay 440 as shown in FIG. 10(b), the shifter stay 440 can be shaped symmetrically (see FIG. 10(b)). By means of this, the erroneous assembling of the sub-speed changing shifter 430 can be prevented, because the shifter stay 440 has no directivity during assembling the sub-speed changing shifter 430.

Additionally, as shown in FIG. 10(a), the sub-speed change mechanism 400 is provided with a counter shaft 450 which is arranged in parallel with the input shaft 401 of the sub-speed change mechanism 400, and which has a counter first gear 451 fixed to one end side thereof, that is, on the side of the input pulley 201 and a counter second gear 452 fixed to another end side thereof. The counter second gear 452 is engaged with the second gear unit 420 fixed to the output shaft 402. The external diameter of the counter first gear 451 is larger than the external diameter of the counter second gear 452.

As shown in FIG. 10(a), when the operator sets the sub-speed changing lever 70 to the low-speed position and thus the sub-speed changing shifter 430 is moved to the side of the input pulley 201, the first gear unit 410 is moved in the same direction in interlocking with the moving of the sub-speed changing shifter 430, so that the first gear 410b is engaged with the counter first gear 451 (see FIG. 13). By the way, the external diameter of the first gear 410b is smaller than the external diameter of the counter first gear 451.

By means of this, the driving power transmitted to the input shaft 401 from the engine 20 is transmitted to the second gear unit 420 fixed to the output shaft 402 via the counter first gear 451 and the counter second gear 452 by the low-speed change ratio (see FIG. 13).

By the way, the configuration which includes the counter first gear 451 and the counter second gear 452 of the present embodiment is one example of a third gear unit of the present invention.

Additionally, as shown in FIG. 11, when the operator switches the sub-speed changing lever 70 from the low-speed position to the high-speed position, and simultaneously in a case where the sub-speed changing shifter 430 is moved in a direction going away from the input pulley 201, the first gear unit 410 is moved in the same direction in interlocking with the moving of the sub-speed changing shifter 430, so that the first engagement claw part 410a is fitted to the second engagement claw part 420a (see FIG. 14).

By means of this, the input shaft 401 and the output shaft 402 are integrally rotated, and the driving power transmitted to the input shaft 401 from the engine 20 is directly transmitted to the output shaft 402 by the high-speed change ratio (see FIG. 14).

By the way, the configuration which includes the first gear unit 410, the second gear unit 420, the counter first gear 451, and the counter second gear 452 of the present embodiment is one example of a sub-speed change mechanism of the present invention.

Accordingly, by the configuration which includes the input shaft 401 of the sub-speed change mechanism 400, the output shaft 402 which is rotatably and loosely fitted to the input shaft 401 in a manner to be capable of being separated from the input shaft 401, and the counter shaft 450, a compact and inexpensive speed-change mechanism which is capable of having two speed change stages (the low-speed stage and the high-speed stage) can be provided.

Additionally, in the present embodiment, the low-speed change ratio of the sub-speed change mechanism 400 is realized by transmitting the driving power from the input shaft 401 to the output shaft 402 via the counter shaft 450, and the high-speed change ratio of the sub-speed change mechanism 400 is realized by fitting the first engagement claw part 410a to the second engagement claw part 420a, that is, by integrating the input shaft 401 with the output shaft 402 which is loosely fitted to the input shaft 401. By means of this, an inexpensive speed-change mechanism whose structure can be simplified can be provided.

Additionally, as described above, in the sub-speed change mechanism 400, the claw-clutch mechanism which includes the first engagement claw part 410a and the second engagement claw part 420a is used in combination with the gear type speed-change mechanism which includes the first gear 410b, the counter first gear 451, the counter second gear 452, and the second gear unit 420. By means of this, compared with the case where the speed-changing mechanism is realized only by speed-change gears, the stroke in the gear shift direction of the sub-speed change mechanism 400 can be shortened. Therefore, since the total length of the sub-transmission case 1400 can be shortened with reference to the right-and-left direction of the machine body, the protruding quantity of the output shaft 20a to the left side of the engine 20 can be shortened, that is, an overhang length of the output pulley 21 from the engine 20 can be reduced, and thus the strength of the output pulley 21 can be improved.

Since the stroke in the gear shift direction of the sub-speed change mechanism 400 can be shortened, the sub-speed changing lever 70 can be arranged between the belt right cover 230 and the main transmission case 1300, and thus a compact walking type tiller can be provided.

Additionally, regarding the configuration of the sub-speed change mechanism 400, the input shaft 401 of the sub-speed change mechanism 400 is located at the center position of the sub-transmission case 1400, and the transmitting gears (that is, the counter first gear 451 and the counter second gear 452) which are used for the low-speed change ratio are located below the input shaft 401. By means of this, the position of the center of gravity of the sub-transmission case 1400 which houses the sub-speed change mechanism 400 can be lowered, and thus the stability of the walking type tiller 1 can be improved.

Additionally, as shown in FIG. 12, since the sub-speed changing lever turning shaft 72, the sub-speed changing shifter 430, and the like are located in the upper space in the sub-transmission case 1400, the moving range of the sub-speed changing lever 70 can be largely ensured, each position of the low-speed position and the high-speed position becomes clear, and thus operation mistakes or operation errors can be reduced.

Additionally, in the present embodiment, in the assumption of a case, where when the sub-speed changing lever 70 is switched from the low-speed position to the high-speed position by the operator, the sub-speed changing shifter 430 is moved in a direction going away from the input pulley 201, however, the projecting part of the first engagement claw part 410a abuts on the projecting part of the second engagement claw part 420a, and the first engagement claw part 410a and the second engagement claw part 420a are fitted to each other in an incomplete state, the configuration of the shifter stay 440 is considered as follows.

That is, the shifter stay 440 is configured in such a manner that the positioning steel ball 445 abuts on a corner part 443 which is formed in a boundary of a straight part 442 and the positioning groove 441b rather than on a straight part 442 between the positioning grooves 441a and 441b of the shifter stay 440, and thus at least a roughly half part of the positioning steel ball 445 is shifted to the positioning groove 441b side in a case where the projecting part of the first engagement claw part 410a abuts on the projecting part of the second engagement claw part 420a, so that the fitting between the first engagement claw part 410a and the second engagement claw part 420a becomes the incomplete state.

By means of this, the first engagement claw part 410a is completely fitted to the second engagement claw part 420a by switching the main clutch function of the tension roller mechanism 250 to a "connected state" even in a case where the projecting part of the first engagement claw part 410a abuts on the projecting part of the second engagement claw part 420a, so that the fitting between the first engagement claw part 410a and the second engagement claw part 420a becomes the incomplete state when the sub-speed changing lever 70 is switched from the low-speed position to the high-speed position by the operator. Specifically, in a case where the main clutch function of the tension roller mechanism 250 is switched to the "connected state", the projecting part of the first engagement claw part 410a is moved from the abutting position on the projecting part of the second engagement claw part 420a to the recessed part of the second engagement claw part 420a by rotation of the input shaft 401, and simultaneously the positioning steel ball 445 is moved in a direction being pushed into the positioning groove 441b of the shifter stay 440 by the energizing force of spring 444, so that the shifter stay 440 is moved in the direction going away from the input pulley 201. By means of this, the first engagement claw part 410a is completely fitted to the second engagement claw part 420a.

Next, a configuration of the main speed change mechanism 300 is described utilizing FIG. 13.

As shown in FIG. 13, the main speed change mechanism 300 is provided with a traveling main speed changing gear unit 310 on the input shaft 301 (see FIG. 10). The traveling main speed changing gear unit 310 has a backward movement/high-speed gear 310a on one end side thereof and a low-speed gear 310b, which is integrally formed with the backward movement/high-speed gear 310a, on another end side thereof, and is movably spline-coupled to the input shaft 301.

The traveling main speed changing gear unit 310 is configured so as to be moved in any direction of directions which are indicated by arrows T1 and T2 (see FIG. 13) via a main speed changing shifter plate (not shown) which is moved in interlocking with the changing operation of the main speed changing lever 80 by the operator.

Specifically, when the main speed changing lever 80 is located at the middle position of the operating handle 40 having the roughly V-shaped form in a plan view as shown in FIG. 2, the traveling main speed changing gear unit 310 is located at the position which is indicated by the solid line in FIG. 13, and thus the main speed change mechanism 300 is changed to a high-speed change ratio.

Additionally, when the main speed changing lever 80 is moved to the right side position of the operating handle 40 in a plan view as shown in FIG. 2, the traveling main speed changing gear unit 310 is moved in the arrow T1 direction, and is located at the position which is indicated by the broken line in FIG. 13, and thus the main speed change mechanism 300 is changed to a speed change ratio for the backward movement.

Additionally, when the main speed changing lever 80 is moved to the left side position of the operating handle 40 in a plan view as shown in FIG. 2, the traveling main speed changing gear unit 310 is moved in the arrow T2 direction, and is located at the position which is indicated by the broken line in FIG. 13, and thus the main speed change mechanism 300 is changed to a low-speed change ratio.

Additionally, when the main speed changing lever 80 is moved to each position of both positions between the high-speed position and the backward movement position and between the high-speed position and the low-speed position in a plan view as shown in FIG. 2, the main speed change mechanism 300 is changed to a neutral state in which the backward movement/high-speed gear 310a and the low-speed gear 310b are not engaged with any gear.

Additionally, as shown in FIG. 13, the main speed change mechanism 300 is provided with a traveling first shaft 320 which has a backward movement first gear 320a fixed on one end side of the traveling first shaft 320 and a backward movement second gear 320b fixed on another end side of the traveling first shaft 320. The backward movement first gear 320a is engaged with the backward movement/high-speed gear 310a when the traveling main speed changing gear unit 310 is moved in the arrow T1 direction. The backward movement second gear 320b is constantly engaged with a traveling third gear 330c which is fixed to a traveling second shaft 330.

When the traveling main speed changing gear unit 310 is moved in the arrow T2 direction, the low-speed gear 310b is engaged with the traveling third gear 330c.

Additionally, as shown in FIG. 13, a traveling first gear 330a and a traveling second gear 330b which is arranged between the traveling first gear 330a and the traveling third gear 330c are fixed to the traveling second shaft 330. The traveling first gear 330a is engaged with the backward movement/high-speed gear 310a when the traveling main speed changing gear unit 310 is located at the position which is indicated by the solid line in FIG. 13, that is, when the main speed change mechanism 300 is changed to the high-speed change ratio.

Additionally, the main speed change mechanism 300 is provided with a traveling third shaft 340 to which a traveling fourth gear 340a and a first sprocket 340b are fixed. The traveling fourth gear 340a is constantly engaged with a traveling second gear 330b.

Additionally, a second sprocket 360 which is connected to the first sprocket 340b by a chain 350 is fixed to the tilling shaft 390.

By means of the above described configuration, when the sub-speed changing lever 70 is changed to the low-speed position (see FIG. 12), the first gear unit 410 is moved on the input shaft 401 to the input pulley 201 side and is engaged with the counter first gear 451, so that the driving power which is transmitted to the input pulley 201 is transmitted to the output shaft 402 at the low-speed change ratio via the counter shaft 450.

Additionally, when the sub-speed changing lever 70 is changed to the high-speed position (see FIG. 12), the first gear unit 410 is moved on the input shaft 401 in a direction going away from the input pulley 201 and the first engagement claw part 410a is fitted to the second engagement claw part 420a, so that the driving power which is transmitted to the input pulley 201 is transmitted to the output shaft 402, which is directly connected to the input shaft 401, at the high-speed change ratio.

On the other hand, as described above, the main speed change mechanism 300 is capable of changing the speed change stage to any one of the high-speed ratio, the backward movement ratio, and the low-speed ratio, that is, three speed change stages by changing the main speed changing lever 80.

As described above, regarding the walking type tiller 1 of the present embodiment, the sealing type sub-transmission case 1400 is fixed to the outside of the main transmission case 1300 without large design change of the main transmission case 1300. By means of this, in a case where the sub-speed changing lever 70 is set to the low-speed position, the main speed change mechanism 300 is capable of changing the speed change stage to any one of the high-speed ratio, the backward movement ratio, and the low-speed ratio, that is, three speed change stages by changing the main speed changing lever 80, and in a case where the sub-speed changing lever 70 is set to the high-speed position, the main speed change mechanism 300 is capable of changing the speed change stage to any one of the high-speed ratio, the backward movement ratio, and the low-speed ratio, that is, three speed change stages by changing the main speed changing lever 80, so that the walking type tiller 1 is capable of changing the speed change stage to any one of six speed change stages.

Next, a front weight mounting member 500 is described utilizing FIG. 15 to FIG. 17.

FIG. 15 is a left side view which shows a state in which the front weight mounting member 500 is mounted to the walking type tiller 1 of the present embodiment.

FIG. 16(a) is a partial plan view which includes a partial sectional view and shows a state in which the front weight mounting member 500 is not mounted to the walking type tiller 1 of the present embodiment. FIG. 16(b) is a partial plan view which includes a partial sectional view and shows a state in which the front weight mounting member 500 is mounted to the walking type tiller 1 of the present embodiment. Incidentally, the above described sub-transmission case 1400 and the like are not shown in FIG. 16(a) and FIG. 16(b).

FIG. 17 is a perspective view of the front weight mounting member 500.

By the way, the front weight mounting member 500 is used in a case where a balance weight 600 (see FIG. 15) is mounted if necessary. By mounting the balance weight 600, the position of the center of gravity of the walking type tiller 1 is changed so as to adjust the weight balance of the whole of the walking type tiller 1, and the steering stability of the walking type tiller 1 can be ensured.

As described above, the bosses 15L and 15R are fixed to the pair of right and left front frames 10L and 10R in advance (see FIG. 1, FIG. 16(a), and FIG. 17).

As shown in FIG. 17, the front weight mounting member 500 is provided with a weight mounting part 520 which has a recessed part that has an approximate U-shape in a side view and that is used for mounting the balance weight 600, a pair of right and left attaching stays 510L and 510R, and a pair of right and left weight fixing pins 530 which are inserted into the holes 520a of the weight mounting part 520 to which the balance weight 600 is positioned, so as to fix the balance weight 600 to the recessed part of the weight mounting part 520. The front end sides of the pair of right and left attaching stays 510L and 510R are provided with the weight mounting part 520, and the rear end sides of the pair of right and left attaching stays 510L and 510R are provided with a pair of right and left through holes 510La and 510Ra. The pair of right and left through holes 510La and 510Ra are located at the positions corresponding to the positions of the through holes 15La and 15Ra of the above described pair of right and left cylindrical bosses 15L and 15R, and have diameters equal to the diameters of the through holes 15La and 15Ra, respectively.

Next, a method of attaching of the front weight mounting member 500 is described.

That is, the inside surfaces of the pair of right and left attaching stays 510L and 510R are arranged to be opposed to the outside surfaces of the pair of right and left cylindrical bosses 15L and 15R which are fixed to the pair of right and left front frames 10L and 10R of the walking type tiller 1 by the operator. Further, the pair of right and left through holes 510La and 510Ra of the attaching stays 510L and 510R are aligned to the pair of right and left through holes 15La and 15Ra of the cylindrical bosses 15L and 15R by the operator, thereafter the penetration bolts 540 are allowed to penetrate these through holes, and the penetration bolts 540 are allowed to be fastened with double nuts 541 to prevent coming-off of the penetration bolts 540.

By the way, each height of the pair of right and left cylindrical bosses 15L and 15R, in the right-and-left direction of the machine body, is set so that each of the pair of right and left attaching stays 510L and 510R does not interfere with the turning shaft 90a, the tension spring 94, and the pair of right and left supporting arms 92 for turning the transport wheel part 90 (see FIG. 16(a) and FIG. 16(b)).

By means of this, the front weight mounting member 500 can be attached without detaching the transport wheel part 90.

By the configuration in which the penetration bolts 540 are fastened with the double nuts 541, the looseness of the penetration bolts 540 can be surely prevented, and the front weight mounting member 500 can be securely fixed to the pair of right and left front frames 10L and 10R. By means of this, vibration of the balance weight 600 which is fixed to the front weight mounting member 500 can be reduced.

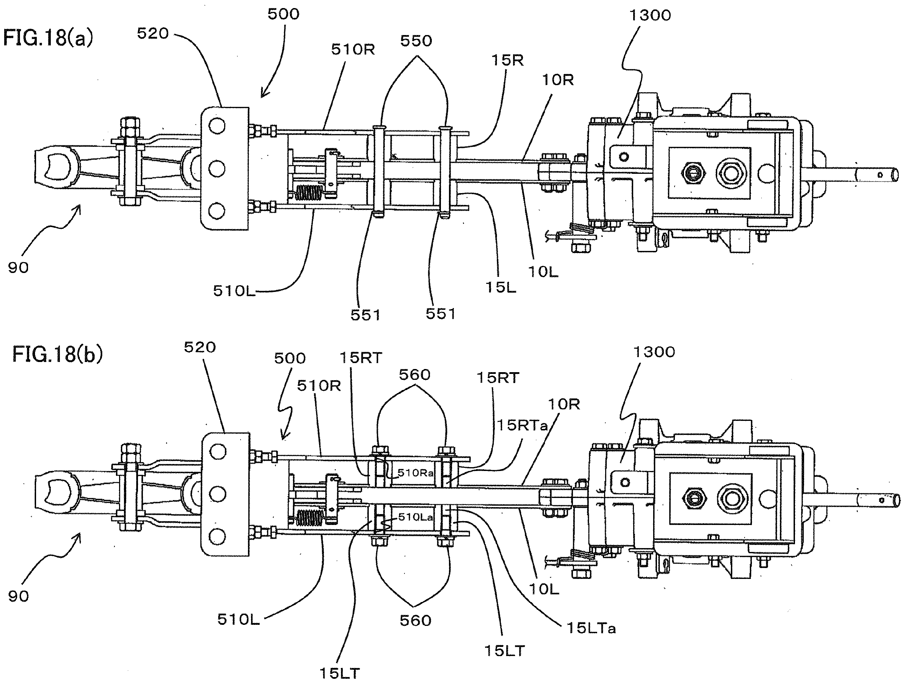

By the way, in the above described embodiment, the descriptions are given regarding the configuration in which the penetration bolts 540 are fastened with the double nuts 541 so that the front weight mounting member 500 can be securely fixed to the pair of right and left front frames 10L and 10R (see FIG. 16(b)). But, it is not limited to the one described above and, for example, such a configuration may be allowed that penetration pins 550 are used by replacing the penetration bolts 540 and a hairpin 551 is attached to each tip end part of the penetration pins 550 to prevent coming-off of the penetration pins 550 as shown in FIG. 18(a). FIG. 18(a) is a schematic plan view which indicates a first variation of the attaching structure of the front weight mounting member 500 explained by using FIG. 16(b).

Additionally, in the above described embodiment, the descriptions are given regarding the configuration in which the penetration bolts 540 are fastened with the double nuts 541 so that the front weight mounting member 500 can be securely fixed to the pair of right and left front frames 10L and 10R (see FIG. 16(b)). But, it is not limited to the one described above and, for example, such a configuration may be allowed that fastening bolts 560 are used by replacing the penetration bolts 540. That is, as shown in FIG. 18(b), in this case, a pair of right and left second cylindrical bosses 15LT and 15RT with tapped holes are previously fixed to the pair of right and left front frames 10L and 10R, respectively. The second cylindrical bosses 15LT and 15RT have tapped holes 15LTa and 15RTa of which screw grooves are formed on inner circumference surfaces. Additionally, in this case, the fastening bolts 560 are fastened to the tapped holes 15LTa of the second cylindrical bosses 15LT from the two through holes 510La of the left attaching stay 510L, and the fastening bolts 560 are fastened to the tapped holes 15RTa of the second cylindrical bosses 15RT from the two through holes 510Ra of the right attaching stay 510R. FIG. 18(b) is a schematic plan view which indicates a second variation of the attaching structure of the front weight mounting member 500 explained by using FIG. 16(b).

By the way, in the above described embodiment, the descriptions are given regarding the configuration in which the low-speed change ratio of the sub-speed change mechanism 400 is realized by transmitting the driving power from the input shaft 401 to the output shaft 402 via the counter shaft 450, and the high-speed change ratio of the sub-speed change mechanism 400 is realized by fitting the first engagement claw part 410a to the second engagement claw part 420a, that is, by integrating the input shaft 401 with the output shaft 402 which is loosely fitted to the input shaft 401. But, the present invention is not limited to the one described above and, for example, such a configuration may be allowed that the high-speed change ratio is realized via an output shaft, and the low-speed change ratio is realized by integrating the input shaft 401 with the output shaft 402 which is loosely fitted to the input shaft 401.

Additionally, in the above described embodiment, the descriptions are given regarding the configuration in which the output shaft 402 is loosely fitted to the input shaft 401. But, the present invention is not limited to the one described above and, for example, such a configuration may be allowed that the counter shaft 450 is an output shaft of the sub-speed change mechanism 400 and one end part of the counter shaft 450 is connected to the input shaft 301 of the main speed change mechanism 300. In this case, the first gear unit 410 and the second gear unit 420 are integrated, and the integrated gear unit is movably spline-coupled to the input shaft 401. By means of this, the integrated gear unit can be moved on the input shaft 401 in interlocking with moving of the shifter plate 431, and thus by switching between a state where the integrated gear unit is engaged with the counter first gear 451 and a state where the integrated gear unit is engaged with the counter second gear 452, it is possible to realize the sub-speed change mechanism which has two speed change stages, that is, the high-speed ratio and the low-speed ratio.

Additionally, in the above described embodiment, the descriptions are given regarding the configuration in which the output shaft 402 of the sub-speed change mechanism 400 is detachably connected to the input shaft 301 of the main speed change mechanism 300 by spline-coupling of the output shaft 402 with the input shaft 301. But, the present invention is not limited to the one described above and, for example, such a configuration may be allowed that the output shaft 402 is detachably connected to the input shaft 301 by connecting means other than the spline-coupling means, or that the output shaft 402 and the input shaft 301 are integrated.

Additionally, in the above described embodiment, the descriptions are given regarding the configuration in which the output shaft 402 of the sub-speed change mechanism 400 is connected to the input shaft 301 of the main speed change mechanism 300 by spline-coupling of the output shaft 402 with the input shaft 301. But, the present invention is not limited to the one described above and, for example, such a configuration may be allowed that the output shaft 402 and the input shaft 301 are connected by a key transmission mechanism in which a key groove and a parallel key are used.

According to the walking type tiller of the present invention, an effect of increasing the number of speed change stages without large design change of a main transmission case is exerted, and a walking type tiller of the present invention is useful for a walking type tiller, a walking type management working machine, and the like.

## Claims

1. A walking type tiller comprising:
an engine (20),
a tilling device (60), and
a main transmission case (1300) which houses a main speed change mechanism (300) that transmits a driving power which is transmitted from the engine (20) via a belt drive mechanism (200), to the tilling device (60) in a manner to be capable of speed changing,
**characterized by** comprising:
a sub-transmission case (1400) which houses a sub-speed change mechanism (400) that transmits the driving power transmitted via the belt drive mechanism (200), to the main speed change mechanism (300) in a manner to be capable of changing a speed of the driving power, the sub-transmission case (1400) being disposed between the belt drive mechanism (200) and the main transmission case (1300), wherein
the main transmission case (1300) is provided with a main speed changing lever (80) which changes a speed change ratio of the main speed change mechanism (300),
the sub-transmission case (1400) is provided with a sub-speed changing lever (70) which changes a speed change ratio of the sub-speed change mechanism (400), and
a grip part of the sub-speed changing lever (70) is disposed below the main speed changing lever (80) in a side view.

2. The walking type tiller according to claim 1, wherein
the sub-speed change mechanism (400) has
an input shaft (401) which receives the driving power from the belt drive mechanism (200) as input, and
an output shaft (402) which outputs the driving power changed in the speed to the main speed change mechanism (300), the output shaft (402) being rotatably supported to the input shaft (401),
the output shaft (402) of the sub-speed change mechanism (400) is connected to the input shaft (301) of the main speed change mechanism (300) by a connecting means in such a manner that the driving power can be transmitted to the input shaft (301) and the output shaft (402) can be attached to and detached from the input shaft (301), so that the sub-transmission case (1400) provided with the sub-apeed changing lever (70) can be attached to and detached from the main transmission case (1300).

3. The walking type tiller according to claim 2, wherein
the sub-speed change mechanism (400) has
a first gear unit (410) which has a first engagement claw part (410a), the first gear unit (410) being movably spline-coupled to the input shaft (401),
a second gear unit (420) which has a second engagement claw part (420a) that is formed so as to be capable of be fitted with the first engagement claw part (410a), the second gear unit (420) being fixed to the output shaft (402), and
a third gear unit (451,452) which transmits the driving power transmitted to the input shaft (401), to the output shaft (402) of the second gear unit (420) at a predetermined speed change ratio to rotate the output shaft (402) by engaging with the first gear unit (410) which is moved on the input shaft (401) in interlocking with moving of the sub-speed changing lever (70) to a predetermined position, and
wherein the first engagement claw part (410a) of the first gear unit (410), which is moved on the input shaft (401) in interlocking with moving of the sub-speed changing lever (70) to a position that is different from the predetermined position, is fitted with the second engagement claw part (420a), so that the input shaft (401) and the output shaft (402) rotate integrally.

## Patentansprüche

1. Grubber, umfassend:
einen Motor (20),
eine Bodenfräse (60) und
ein Hauptgetriebegehäuse (1300), das einen Hauptdrehzahländerungsmechanismus (300) enthält, der eine Antriebskraft überträgt, die vom Motor (20) über eine Bandantriebseinrichtung (200) auf die Bodenfräse (60) derart überträgt wird, dass eine Drehzahländerung ermöglicht wird,
**dadurch gekennzeichnet**, das er umfasst:
ein Nebengetriebegehäuse (1400), das einen Nebendrehzahländerungsmechanismus (400) enthält, der die über die Bandantriebseinrichtung (200) übertragene Antriebskraft auf den Hauptdrehzahländerungsmechanismus (300) so überträgt, dass dadurch eine Drehzahl der Antriebskraft geändert werden kann, wobei das Nebengehäuse (1400) zwischen der Bandantriebseinrichtung (200) und dem Hauptgehäuse (1300) angeordnet ist, wobei
das Hauptgehäuse (1300) mit einem Hauptdrehzahländerungshebel (80) versehen ist, der ein Drehzahländerungsverhältnis des Mechanismus (300) ändert,
das Nebengehäuse (1400) mit einem Nebendrehzahländerungshebel (70) versehen ist, der ein Drehzahländerungsverhältnis des Nebendrehzahländerungsmechanismus (400) ändert, und
ein Griffteil des Nebenhebels (70), von der Seite her gesehen, unter dem Haupthebel (80) angeordnet ist.

2. Grubber nach Anspruch 1, wobei
der Nebendrehzahländerungsmechanismus (400) umfasst:
eine Eingangswelle (401), die die Antriebskraft von der Bandantriebseinrichtung (200) als Eingang empfängt, und
eine Antriebswelle (402), die die in der Geschwindigkeit geänderte Antriebskraft an den Mechanismus (300) ausgibt, wobei die Antriebswelle (402) auf der Eingangswelle (401) rotierbar getragen wird,
die Antriebswelle (402) des Nebenmechanismus (400) über ein Verbindungsmittel an die Eingangswelle (301) des Mechanismus (300) derart angeschlossen ist, dass die Antriebskraft auf die Eingangswelle (301) übertragen werden kann, und die Antriebswelle (402) mit der Eingangswelle (301) verbunden und davon getrennt warden kann, damit das mit dem Nebenhebel (70) versehene Nebengehäuse (1400) mit dem Hauptgehäuse (1300) verbunden und davon getrennt werden kann.

3. Grubber nach Anspruch 2, wobei
der Nebendrehzahländerungsmechanismus (400) umfasst:
eine erste Getriebeeinrichtung (410) mit einer ersten Eingriffskralle (410a), wobei die erste Getriebeeinrichtung (410) mit der Eingangswelle (401) beweglich kerbverzahnt ist,
eine zweite Getriebeeinrichtung (420) mit einer zweiten Eingriffskralle (420a), die derart ausgebildet ist, dass sie zur ersten Eingriffskralle (410a) passt, wobei die zweite Getriebeeinrichtung (420) auf der Antriebswelle (402) fixiert ist, und
eine dritte Getriebeeinrichtung (451, 452), die die auf die Eingangswelle (401) übertragene Antriebskraft auf die Antriebswelle (402) der zweiten Getriebeeinrichtung (420) in einem vorgegebenen Drehzahländerungsverhältnis überträgt, indem sie in die erste Getriebeeinrichtung (410) eingreift, die auf der Eingangswelle (401) bewegt wird und dabei mit der Bewegung des Nebenhebels (70) in eine vorgegebene Stellung verzahnt ist, und
wobei die erste Kralle (410a) der ersten Getriebeeinrichtung (410), die auf der Eingangswelle (401) bewegt wird und dabei mit der Bewegung des Nebenhebels (70) in eine Stellung, die sich von der vorgegebenen Stellung unterscheidet, verzahnt ist, zur zweiten Kralle (420a) passt, damit die Eingangswelle (401) und die Antriebswelle (402) integral rotieren.

## Revendications

1. Motoculteur à conducteur accompagnant comprenant :
un moteur (20) ;
un dispositif de labourage (60), et
un carter de transmission (1300) qui contient un mécanisme de changement de vitesses principal (300) qui transmet une force motrice qui est transmise par le moteur (20) via un mécanisme d'entraînement à courroie (200) au dispositif de labourage (60) de manière à pouvoir changer de vitesse,
**caractérisé en ce qu'**il comprend :
un carter de transmission secondaire (1400) qui contient un mécanisme de changement de vitesses secondaire (400) qui transmet la force motrice transmise via le mécanisme d'entraînement à courroie (200) au mécanisme de changement de vitesses principal (300) de manière à pouvoir changer une vitesse de la force motrice, le carter de transmission secondaire (1400) étant disposé entre le mécanisme d'entraînement à courroie (200) et le carter de transmission principal (1300), dans lequel
le carter de transmission principal (1300) est muni d'un levier de changement de vitesses principal (80) qui change un rapport de changement de vitesses du mécanisme de changement de vitesses principal (300),
le carter de transmission secondaire (1400) est muni d'un levier de changement de vitesses secondaire (70) qui change un rapport de changement de vitesses du mécanisme de changement de vitesses secondaire (400),
et
une partie de préhension du levier de changement de vitesses secondaire (70) est disposée sous le levier de changement de vitesses principal (80) lorsqu'il est vu de côté.

2. Motoculteur à conducteur accompagnant selon la revendication 1, dans lequel
le mécanisme de changement de vitesses secondaire (400) possède
un arbre d'entrée (401) qui reçoit la force motrice de la part du mécanisme d'entraînement à courroie (200) en guise d'entrée, et
un arbre de sortie (402) qui fournit la force motrice dont la vitesse a été changée au mécanisme de changement de vitesses principal (300), l'arbre de sortie (402) étant supporté de manière rotative sur l'arbre d'entrée (401),
l'arbre de sortie (402) du mécanisme de changement de vitesses secondaire (400) est relié à l'arbre d'entrée (301) du mécanisme de changement de vitesses principal (300) par un moyen de raccordement de sorte que la force motrice puisse être transmise à l'arbre d'entrée (301) et que l'arbre de sortie (402) puisse être relié à et détaché de l'arbre d'entrée (301), de sorte que le carter de transmission secondaire (1400) muni du levier de changement de vitesses secondaire (70) puisse être relié à et détaché du carter de transmission principal (1300).

3. Motoculteur à conducteur accompagnant selon la revendication 2, dans lequel
le mécanisme de changement de vitesses secondaire (400) possède
un premier groupe d'engrenages (410) qui possède une première partie de doigt d'engagement (410a), le premier groupe d'engrenages (410) étant couplé par cannelure de manière mobile à l'arbre d'entrée (401),
un second groupe d'engrenages (420) qui possède une seconde partie de doigt d'engagement (420a) qui est formée de façon à pouvoir être accouplée avec le première partie de doigt d'engagement (410a), le second groupe d'engrenages (420) étant fixé sur l'arbre de sortie (402), et
un troisième groupe d'engrenages (451, 452) qui transmet la force motrice transmise à l'arbre d'entrée (401) à l'arbre de sortie (402) du second groupe d'engrenages (420) à un rapport de changement de vitesses prédéterminé afin de faire tourner l'arbre de sortie (402) par engagement avec le premier groupe d'engrenages (410) qui est déplacé sur l'arbre d'entrée (401) par emboîtement avec le déplacement du levier de changement de vitesses secondaire (70) vers une position prédéterminée, et
dans lequel la première partie de doigt d'engagement (410a) du premier groupe d'engrenages (410), qui est déplacée sur l'arbre d'entrée (401) en emboîtement avec le déplacement du levier de changement de vitesses secondaire (70) dans une position qui est différente de la position prédéterminée, est accouplée avec la seconde partie de doigt d'engagement (420a), de sorte que l'arbre d'entrée (401) et l'arbre de sortie (402) tournent intégralement.
